# EUROPÄISCHE PATENTSCHRIFT

(11) **EP 3 529 407 B1**
(45) Veröffentlichungstag und Bekanntmachung des Hinweises auf die Patenterteilung: **02.12.2020**
(21) Anmeldenummer: 17790709.4
(22) Anmeldetag: 11.10.2017
(51) Int. Cl.: D04H 3/02, D04H 3/14, D04H 3/16

(54) **VERFAHREN UND ANLAGE ZUR ERZEUGUNG EINES VLIESES AUS FASERN**
METHOD AND SYSTEM FOR PRODUCING A FLEECE FROM FIBERS
PROCÉDÉ ET INSTALLATION DE PRODUCTION D'UN NON-TISSÉ À PARTIR DE FIBRES

(30) Priorität: 18.10.2016 DE 102016119866
(43) Veröffentlichungstag der Anmeldung: 28.08.2019
(73) Patentinhaber: Reifenhäuser GmbH & Co. KG Maschinenfabrik, 53844 Troisdorf (DE)
(72) Erfinder: FETT, Thomas, 53840 Troisdorf (DE); HILGERS, Mark, 53844 Troisdorf (DE); LETTOWSKY,Christoph, 52074 Aachen (DE); MAGER, Jens, 50968 Köln (DE); RÖSNER, Andreas, 53113 Bonn (DE); STELTER, Christian, 55218 Ingelheim (DE); VODENCAREVIC, Asmir, 90763 Fürth (DE)
(74) Vertreter: Andrejewski - Honke Patent- und Rechtsanwälte Partnerschaft mbB
(86) Internationale Anmeldenummer: PCT/EP2017/075979
(87) Internationale Veröffentlichungsnummer: WO 2018/073081

(56) Entgegenhaltungen:
- DE-A1- 4 014 414
- DE-A1- 4 312 309
- US-A- 4 692 106
- US-A- 4 820 459

## Beschreibung

Die Erfindung betrifft ein Verfahren zur Erzeugung eines Vlieses aus Fasern in einer Vlieserzeugungsanlage, insbesondere zur Erzeugung eines Spunbond-Vlieses aus Endlosfilamenten oder zur Erzeugung eines Meltblown-Vlieses aus Endlosfilamenten, wobei die Fasern bzw. die Filamente mittels zumindest einer Spinnvorrichtung ersponnen werden, gegebenenfalls im Anschluss daran mittels zumindest einer Kühlvorrichtung gekühlt werden, daraufhin vorzugsweise verstreckt werden und anschließend auf einer Ablageeinrichtung als Vliesbahn abgelegt werden. Die Erfindung betrifft fernerhin eine Anlage zur Erzeugung eines Vlieses aus Fasern bzw. Endlosfilamenten. - Besonders bevorzugt ist im Rahmen der Erfindung die Erzeugung eines Vlieses - insbesondere eines Spunbond-Vlieses oder Meltblown-Vlieses - aus Endlosfilamenten. Endlosfilamente unterscheiden sich aufgrund ihrer quasi endlosen Länge von Stapelfasern, die viel geringere Längen von beispielsweise 10 mm bis 60 mm aufweisen.

Verfahren und Anlagen der vorstehend beschriebenen Art sind aus der Praxis und aus dem Stand der Technik - beispielsweise aus den Dokumenten DE 43 12 309 A1, US 4,820,459 A, DE 40 14 414 A1 und US 4,692,106 A - in unterschiedlichen Ausführungsformen grundsätzlich bekannt. Aus der Praxis sind insbesondere verschiedene Verfahren zur Erzeugung von Spunbond-Vliesen aus Endlosfilamenten bekannt, bei denen die Endlosfilamente mittels einer Spinnvorrichtung bzw. Spinnerette ersponnen werden und anschließend in zumindest einer Kühlkammer einer Kühlvorrichtung gekühlt werden. Dabei wird der Kühlkammer bzw. den durch die Kühlkammer geführten Filamenten von gegenüberliegenden Seiten Prozessluft bzw. Kühlluft aus einer Luftzufuhrkabine zugeführt. Hierzu sind in der Regel Gebläse vorgesehen, mit deren Hilfe die Prozessluft bzw. Kühlluft in die Kühlkammer eingeführt wird. Dabei ist es weiterhin bekannt, den Luftdruck in der Luftzufuhrkabine mittels zumindest eines Drucksensors zu messen. Dieser gemessene Luftdruck dient als Regelgröße für die Steuerung bzw. Regelung der Gebläsedrehzahlen. Bei einem Ausfall des Drucksensors bzw. der Drucksensoren muss normalerweise zur Vermeidung von unberechenbaren Störungen der laufende Betrieb der Anlage unterbrochen werden.

Es ist fernerhin bekannt, dass die in der Kühlkammer gekühlten Filamente anschließend in eine Verstreckeinrichtung, insbesondere in einen Zwischenkanal bzw. Verstreckkanal der Verstreckeinrichtung eintreten. Dabei kann es vorkommen, dass Filamente im Zwischenkanal bzw. Verstreckkanal hängen bleiben. Da weitere Filamente von oben nachgeführt werden, kann es zu Verstopfungen kommen. Das wiederum kann zur Folge haben, dass die Luftzufuhrkabine nicht ausreichend von Luft durchströmt wird und die Filamente somit nicht hinreichend gekühlt werden. Dadurch kann sich die nachgeführte flüssige Kunststoffschmelze in der Kühlkammer aufstauen und hierdurch können beispielsweise die Luftgleichrichter der Luftzufuhrkabine beschädigt werden. Bei solchen Störfällen kann ein Produktionsstillstand von bis zu zwei Wochen die Folge sein. Im Rahmen der aktuellen Steuerung bzw. Regelung der Gebläse kann ein solcher Störzustand nicht ohne weiteres erkannt und vermieden werden.

Auch in anderen Anlagenkomponenten der bekannten Vlieserzeugungsanlagen werden Störzustände bzw. Anomalien nicht immer erkannt bzw. nicht immer rechtzeitig erkannt, so dass es zu unerwünschten Produktionsstillständen kommen kann. Das gilt vor allem bei einem Ausfall von Messvorrichtungen bzw. Messsensoren.

Demgegenüber liegt der Erfindung das technische Problem zugrunde, ein Verfahren der eingangs genannten Art anzugeben, bei dem Anlagenparameter auf einfache und relativ präzise Weise ermittelt werden können und bei dem ein wenig aufwendiges, funktionssicheres und rechtzeitiges Erkennen von Störzuständen bzw. Anomalien möglich ist. Der Erfindung liegt fernerhin das technische Problem zugrunde, eine entsprechende Vlieserzeugungsanlage anzugeben.

Zur Lösung dieses technischen Problems lehrt die Erfindung ein Verfahren zur Erzeugung eines Vlieses aus Fasern in einer Vlieserzeugungsanlage - insbesondere zur Erzeugung eines Spunbond-Vlieses aus Endlosfilamenten oder zur Erzeugung eines Meltblown-Vlieses aus Endlosfilamenten -, wobei die Fasern bzw. Filamente mittels zumindest einer Spinnvorrichtung ersponnen werden, gegebenenfalls im Anschluss daran mittels zumindest einer Kühlvorrichtung gekühlt werden - vorzugsweise daraufhin verstreckt werden - und anschließend auf eine Ablageeinrichtung als Vliesbahn abgelegt werden,
wobei zumindest ein Referenzparameter zur Verfügung gestellt wird, wobei im laufenden Betrieb der Anlage zumindest zwei, vorzugsweise zumindest drei von dem Referenzparameter verschiedene Eingangsparameter mit Hilfe von Messvorrichtungen gemessen werden und wobei aus diesen gemessenen Eingangsparametern mittels zumindest einer Auswertungseinrichtung ein dem Referenzparameter entsprechender Ausgangsparameter ermittelt wird. Es liegt im Rahmen der Erfindung, dass der ermittelte Ausgangsparameter mit dem Referenzparameter verglichen wird. - Nach besonders bevorzugter Ausführungsform der Erfindung wird bei einer Abweichung zumindest eines ermittelten Wertes des Ausgangsparameters von dem zumindest einen Wert bzw. Messwert des Referenzparameters eine Anomalie des Ausgangsparameters signalisiert. Die Signalisierung erfolgt insbesondere durch ein visuelles und/oder akustisches Signal. Gemäß einer sehr bevorzugten Ausführungsvariante wird die Abweichung bzw. Anomalie dokumentiert, insbesondere durch Abspeichern in einem Speicher bzw. in einem unabhängigen Speicher. Dabei kann es sich um eine Datenbank, eine Cloud oder dergleichen Speicher handeln. Mit der bevorzugten Dokumentierung bzw. Abspeicherung werden spätere Auswertungen und/oder Zuordnungen erleichtert. Beim Erkennen oder Signalisieren der vorstehend genannten Abweichung bzw. Anomalie sind grundsätzlich die folgenden Reaktionen möglich: Die gesamte Anlage wird abgeschaltet und/oder einzelne Anlagenkomponenten werden abgeschaltet und/oder bei Anlagenkomponenten mit Einstellmöglichkeiten werden die Anlagenkomponenten eingestellt und zwar zweckmäßigerweise so eingestellt, dass Einfluss auf die gemessenen Eingangsparameter und somit auf den daraus ermittelten Ausgangsparameter genommen werden kann. Insoweit erfolgt in Abhängigkeit von der erkannten Abweichung bzw. Anomalie vorzugsweise eine Steuerung und/oder Regelung der einzelnen Anlagenkomponenten. So kann beispielsweise in Abhängigkeit von dem Erkennen einer Abweichung bzw. einer Anomalie die Gebläsedrehzahl eines Gebläses und/oder die Temperatur einer Temperiervorrichtung und/oder die Öffnungsweite einer Öffnung bzw. Gasdurchtrittsöffnung gesteuert und/oder geregelt werden. Die oben genannte Anomalie des Ausgangsparameters kann im Übrigen auch auf Eingangsparameter zurückzuführen sein, die aus Messungen mit gestörten bzw. rekalibrierten Messeinrichtungen bzw. Sensoren resultieren.

Der Begriff Parameter (insbesondere Referenzparameter, Eingangsparameter, Ausgangsparameter) steht im Rahmen der Erfindung für eine Messgröße bzw. physikalische Messgröße, wie beispielsweise für den Druck, die Temperatur, den Volumenstrom, die Drehzahl oder die Öffnungsweite einer Gasdurchtrittsöffnung. Messwert meint im Rahmen der Erfindung den gemessenen Wert dieses Parameters bzw. dieser Messgröße. - Dass ein Ausgangsparameter dem Referenzparameter entspricht, meint im Rahmen der Erfindung, dass Ausgangsparameter und Referenzparameter die gleiche Messgröße bzw. physikalische Messgröße - beispielsweise den Druck - betreffen.

Nach besonders bevorzugter Ausführungsform der Erfindung wird der zumindest eine Referenzparameter bzw. der Referenzparameter mit zumindest einer Referenzmessvorrichtung in einem Referenzbetrieb der Vlieserzeugungsanlage gemessen. Referenzbetrieb der Vlieserzeugungsanlage meint dabei insbesondere den störungsfreien Normalbetrieb der Anlage. Ein in diesem Zustand gemessener Referenzparameter - beispielsweise der Luftdruck - wird dann im Rahmen des erfindungsgemäßen Verfahrens mit dem ermittelten bzw. berechneten entsprechenden Ausgangsparameter (ermittelter Luftdruck) verglichen. Die Messung des Referenzparameters in dem Referenzbetrieb der Vlieserzeugungsanlage erfolgt nach einer empfohlenen Ausführungsform als Inline-Messung während eines kontinuierlichen Referenzbetriebs der Anlage. Gemäß einer weiteren Ausführungsform kann die Messung des Referenzparameters mit der Referenzmessvorrichtung aber auch offline erfolgen. Eine solche Offline-Messung des Referenzparameters bietet sich beispielsweise an, wenn es sich bei dem Referenzparameter um eine Einzelschichtdicke in einem Laminat, eine Zugfestigkeit oder dergleichen handelt. - Nach einer anderen Ausführungsform der Erfindung kann der Referenzparameter bzw. zumindest ein Referenzparameter als Erfahrungsparameter vorgegeben werden. Das bedeutet, dass der Referenzparameter nicht zwingend im Rahmen des erfindungsgemäßen Verfahrens gemessen werden muss, sondern dass zumindest ein Wert bzw. ein Wert des Referenzparameters bereits als Erfahrungsparameter bzw. Erfahrungswert vorliegt. Dieser Erfahrungsparameter bzw. Erfahrungswert kann aus früheren Messungen stammen oder das Ergebnis von Ermittlungen bzw. Berechnungen sein.

Es liegt im Rahmen der Erfindung, dass zumindest zwei verschiedene Eingangsparameter mit Hilfe von Messvorrichtungen gemessen werden und dass aus diesen gemessenen Eingangsparametern mit einer Auswertungseinrichtung ein Ausgangsparameter ermittelt wird. So können insbesondere mit Messvorrichtungen Eingangsparameter wie Temperatur, Volumenstrom, Gebläsedrehzahl und dergleichen gemessen werden und daraus kann mit der Auswertungseinrichtung zumindest ein Ausgangsparameter - beispielsweise der Druck bzw. Luftdruck - ermittelt werden. Grundsätzlich kann im Rahmen der Erfindung aber auch zumindest ein Eingangsparameter als fester bzw. konstanter Anlagenparameter vorgegeben werden und zur Ermittlung des Ausgangsparameters eingesetzt werden. Bei diesem fest vorgegebenen Anlagenparameter bzw. Eingangsparameter kann es sich beispielsweise um eine geometrische Größe handeln, zum Beispiel um eine feste Öffnungsweite, eine feste Querschnittsfläche oder dergleichen. Nichtsdestoweniger werden im Rahmen des erfindungsgemäßen Verfahrens zumindest zwei Eingangsparameter, vorzugsweise zumindest drei Eingangsparameter (als Eingangsparameter mit variablen Messwerten) mit Messvorrichtungen gemessen. Der Ausgangsparameter wird dann aus dem zumindest einen vorgegebenen Eingangsparameter und den weiteren gemessenen Eingangsparametern ermittelt. Bei Abweichung des auf diese Weise ermittelten Wertes des Ausgangsparameters von dem Wert / Messwert des Referenzparameters wird die Anomalie des Ausgangsparameters signalisiert und es kann - wie oben bereits beschrieben - Einfluss auf die Anlage und/oder Anlagenkomponenten bzw. auf die Steuerung der Anlage und/oder Anlagenkomponenten ausgeübt werden.

Nach einer Ausführungsform der Erfindung kann der zumindest eine Referenzparameter bzw. der Referenzwert des Referenzparameters auch berechnet werden bzw. unter Zugrundelegung anderer bekannter Parameter berechnet werden. Eine solche Berechnung des Referenzparameters ist dann zweckmäßig, wenn die Messung des Referenzparameters mit einer Referenzmessvorrichtung nicht oder nicht ohne weiteres möglich ist. - Es liegt weiterhin im Rahmen der Erfindung, dass zumindest ein Eingangsparameter berechnet wird. Auch hier ist die Berechnung zumindest eines Eingangsparameters dann sinnvoll, wenn eine Messung des Eingangsparameters nicht oder nicht ohne weiteres möglich ist. Der betreffende Eingangsparameter wird dann anhand von bekannten Parametern bzw. Zustandsparametern berechnet. Dieser berechnete Eingangsparameter geht dann zweckmäßigerweise in die Ermittlung des Ausgangsparameters ein. - Entsprechend einer Ausführungsform der Erfindung kann dann der Ausgangsparameter aus den gemessenen Eingangsparametern, gegebenenfalls aus dem zumindest einen festen vorgegebenen Eingangsparameter und eventuell zusätzlich aus zumindest einem berechneten Eingangsparameter ermittelt werden. Bei Abweichung des Ausgangsparameters vom Referenzparameter kann dann wiederum wie oben beschrieben verfahren werden.

Es liegt im Rahmen der Erfindung, dass die Fasern bzw. Filamente aus thermoplastischem Kunststoff erzeugt werden und dass der Kunststoff bzw. die Kunststoffschmelze mittels zumindest eines Extruders der Spinnvorrichtung zugeführt wird. Bei der Herstellung von Mehrkomponentenfasern bzw. Mehrkomponentenfilamenten werden zwei oder mehr Extruder zur Zuführung der Kunststoffschmelze eingesetzt. Zweckmäßigerweise wird der aus einem Extruder austretende Kunststoff bzw. schmelzflüssige Kunststoff mit Hilfe einer Schmelzepumpe der Spinnvorrichtung zugeführt. - Gemäß einer Ausführungsform der Erfindung ist der zumindest eine Referenzparameter bzw. Ausgangsparameter zumindest ein den eingesetzten Kunststoff betreffender Parameter aus der Gruppe "Rohstoffdichte, Schüttdichte, Dosierungsmenge, Schmelzedichte, Förderrate, Schmelzeleckage". Die zur Ermittlung des entsprechenden Ausgangsparameters einzusetzenden bzw. zu messenden Eingangsparameter sind dann vorzugsweise Parameter aus der Gruppe "Schmelzedruck, Extrudertemperatur, Extruderdrehzahl, Extruderdrehmoment, Pumpendrehzahl, Schmelzetemperatur". - Rohstoffdichte meint im Rahmen der Erfindung insbesondere die Dichte des zur Herstellung der Fasern eingesetzten Kunststoffes bzw. die Dichte der eingesetzten Kunststoffe. - Schüttdichte meint im Rahmen der Erfindung die Dichte des in der erfindungsgemäßen Anlage eingesetzten Kunststoffes bzw. Kunststoffgranulates, insbesondere in einem dem Extruder vorgeschalteten Trichter. Dosierungsmenge meint im Rahmen der Erfindung die dem Extruder zugeführte Kunststoffmenge. Weiterhin meint Schmelzedichte im Rahmen der Erfindung insbesondere die Dichte der der Spinnvorrichtung zugeführten Kunststoffschmelze und Förderrate bezieht sich insbesondere auf die Menge der der Spinnvorrichtung zugeführten Kunststoffschmelze. - Schmelzedruck und Extrudertemperatur beziehen sich insbesondere auf den im Extruder gemessenen Schmelzedruck bzw. die im Extruder gemessene Temperatur. Extruderdrehzahl und Extruderdrehmoment betreffen die Drehzahl und das Drehmoment der Extruderschnecke. Mit Pumpendrehzahl ist insbesondere die Drehzahl der vorzugsweise eingesetzten Schmelzepumpe gemeint.

Eine Ausführungsform der Erfindung ist dadurch gekennzeichnet, dass als Ausgangsparameter bzw. Referenzparameter die Rohstoffdichte (des Kunststoffes bzw. der Kunststoffe) verwendet wird. Auf diese Weise kann frühzeitig der eventuelle Einsatz eines falschen bzw. verwechselten Rohstoffes detektiert werden. Somit ist eine frühzeitige Detektion von rohstoffbedingten Produktionsproblemen aufgrund von Anwenderfehlern und/oder Lagerfehlern und/oder Chargen-Schwankungen sowie der daraus resultierenden Verarbeitungsprobleme möglich.

Es liegt im Rahmen der Erfindung, dass der schmelzflüssige Kunststoff in Förderrichtung vor der Spinnvorrichtung und vorzugsweise von der Schmelzepumpe durch zumindest ein bzw. durch ein Reinigungssieb geführt wird. In diesem Fall können die Eingangsparameter (zusätzlich) aus der Gruppe "Schmelzedruck vor dem Reinigungssieb, Schmelzedruck hinter dem Reinigungssieb, Betriebsstunden des Reinigungssiebes" ausgewählt werden. Bei den Betriebsstunden des Reinigungssiebes kann es sich um einen fest vorgegebenen - und somit nicht aktuell zu messenden - Eingangsparameter handeln.

Eine sehr empfohlene Ausführungsform des erfindungsgemäßen Verfahrens, der im Rahmen der Erfindung besondere Bedeutung zukommt, ist dadurch gekennzeichnet, dass das Vlies als Spunbond-Vlies aus Endlosfilamenten erzeugt wird, dass diese Endlosfilamente mittels zumindest einer Spinnerette ersponnen werden, dass die ersponnenen Filamente in zumindest einer Kühlkammer der Kühlvorrichtung gekühlt werden, dass in die Kühlkammer aus zumindest einer Luftzufuhrkabine Prozessluft bzw. Kühlluft mittels zumindest eines Gebläses einblasbar ist, dass die Filamente verstreckt werden und im Anschluss daran auf einer Ablageeinrichtung, insbesondere auf einem Ablagesiebband abgelegt werden. Es liegt dabei im Rahmen der Erfindung, dass zwischen der Spinnvorrichtung bzw. Spinnerette und der Kühlkammer eine Monomerabsaugung durchgeführt wird. Dazu ist zweckmäßigerweise zwischen der Spinnerette und der Kühlkammer bzw. der Luftzufuhrkabine eine Monomerabsaugungsvorrichtung angeordnet. Diese Monomerabsaugungsvorrichtung saugt Luft aus dem Filamentbildungsraum unterhalb der Spinnerette ab, wodurch erreicht wird, dass die neben den Endlosfilamenten austretenden Gase wie Monomere, Oligomere, Zersetzungsprodukte und dergleichen aus der Anlage entfernt werden. Es empfiehlt sich, dass die Monomerabsaugungsvorrichtung zumindest eine Absaugungskammer aufweist, an die bevorzugt zumindest ein Absaugungsgebläse angeschlossen ist. Vorzugsweise weist die Absaugungskammer zum Filamentbildungsraum hin zumindest einen Absaugungsspalt auf. Es liegt im Rahmen der Erfindung, dass auf beiden gegenüberliegenden Seiten des Filamentbildungsraumes jeweils zumindest ein Absaugungsspalt für die Monomerabsaugung vorgesehen ist. Vorzugsweise ist der Kühlkammer eine Verstreckeinrichtung nachgeschaltet, mit deren Hilfe die Endlosfilamente verstreckt werden. Eine empfohlene Ausführungsform der Erfindung zeichnet sich dadurch aus, dass zwischen Verstreckeinrichtung und Ablageeinrichtung bzw. Ablagesiebband zumindest ein Diffusor angeordnet ist, durch den die Filamente geführt werden und im Anschluss an den Diffusor zur Vliesbahn auf der Ablageeinrichtung abgelegt werden.

Eine ganz besonders bevorzugte Ausführungsform der Erfindung zeichnet sich dadurch aus, dass der Referenzparameter bzw. Ausgangsparameter der Kabinendruck der Luftzufuhrkabine der Kühlkammer ist. Der Ausgangsparameter Kabinendruck wird dabei vorzugsweise aus Eingangsparametern aus der Gruppe "Schmelzetemperatur, Monomervolumenstrom, Prozesslufttemperatur, Gebläsedrehzahl, Austrittsspaltweite des Verstreckkanals, Stellungen der Diffusorwände" ermittelt. - Schmelzetemperatur meint insbesondere die Temperatur der Kunststoffschmelze im Bereich der Düse der Spinnvorrichtung bzw. Spinnerette. Mit Monomervolumenstrom ist insbesondere der in der Monomerabsaugung auftretende Volumenstrom der abgesaugten Gase gemeint. Der Monomervolumenstrom kann nach einer Ausführungsvariante der Erfindung anhand der Öffnungsweite des Absaugungsspaltes bzw. der Absaugungsspalte der Monomerabsaugung und/oder anhand der Gebläsedrehzahl eines Absaugungsgebläses der Monomerabsaugung ermittelt werden. Bezüglich der Öffnungsweite der Monomerabsaugung kann die Stellung eines Verschlusselementes, insbesondere einer Verschlussklappe für den Absaugungsspalt bzw. für die Absaugungsspalte der Monomerabsaugung gemessen/ermittelt werden und für die Berechnung des Monomervolumenstroms herangezogen werden. Prozesslufttemperatur meint insbesondere die Temperatur der von der Luftzufuhrkabine zugeführten Prozessluft bzw. Kühlluft. Nach besonders empfohlener Ausführungsform der Erfindung werden zumindest zwei bzw. zwei Prozessluftströme unterschiedlicher Temperatur Tₐ und T_{b} in die Kühlkammer eingeführt. Dann handelt es sich bei den beiden unterschiedlichen Prozesslufttemperaturen Tₐ und T_{b} um zu messende und für die Ermittlung des Ausgangsparameters heranzuziehende Eingangsparameter. Die genannte Gebläsedrehzahl bezieht sich gemäß bevorzugter Ausführungsvariante auf die Drehzahl eines in der Luftzufuhrkabine angeordneten und für die Zuführung der Prozessluft vorgesehenen Gebläses. Vorzugsweise werden im Rahmen des erfindungsgemäßen Verfahrens in der Luftzufuhrkabine zur Zuführung der Prozessluft zumindest zwei bzw. zwei unabhängig voneinander betriebene Gebläse eingesetzt. Zweckmäßigerweise dienen die beiden Gebläse jeweils zum Einbringen von Prozessluft bzw. Kühlluft unterschiedlicher Temperatur Tₐ bzw. T_{b} in die Kühlkammer. Jedes dieser Gebläse der Luftzufuhrkabine weist eine separate Drehzahl auf und bevorzugt bildet jede Gebläsedrehzahl nₐ bzw. n_{b} einen zu bestimmenden bzw. zu messenden Eingangsparameter. Grundsätzlich könnte auch das Drehmoment eines Gebläses bzw. die beiden Gebläsedrehmomente der beiden Gebläse als Eingangsparameter verwendet werden. - Aus den obigen Ausführungen ergibt sich, dass bezüglich der beiden Gebläse der Luftzufuhrkabine zweckmäßigerweise zumindest vier bzw. vier zu messende Eingangsparameter zur Verfügung stehen und zwar bevorzugt die beiden Prozesslufttemperaturen Tₐ und T_{b} sowie die beiden Gebläsedrehzahlen nₐ und n_{b}.

Es wurde bereits darauf hingewiesen, dass nach sehr bevorzugter Ausführungsform der Kabinendruck der Luftzufuhrkabine Referenzparameter und Ausgangsparameter ist. Dabei wird zunächst zweckmäßigerweise der Kabinendruck als Referenzparameter in einem Referenzbetrieb (störungsfreier Normalbetrieb) der Vlieserzeugungsanlage gemessen. Dieser gemessene Druckwert bzw. diese gemessenen Druckwerte des Referenzparameters dient/dienen somit als Vergleichswert(e) für den im laufenden Betrieb der Anlage ermittelten Kabinendruck als Ausgangsparameter. Der Kabinendruck als Ausgangsparameter im laufenden Betrieb der Anlage wird dabei mittels der zumindest einen Auswertungseinrichtung auf Basis insbesondere der Eingangsparameter "Schmelzetemperatur, Monomervolumenstrom, Prozesslufttemperatur, Gebläsedrehzahl, Austrittsspaltweite des Verstreckkanals, Stellungen der Diffusorwände" ermittelt. Zweckmäßigerweise werden dabei zumindest zwei Gebläsedrehzahlen von zwei separat betriebenen Gebläsen der Luftzufuhrkabine zugrunde gelegt. Während Schmelzetemperatur, Monomervolumenstrom, Prozesslufttemperatur und Gebläsedrehzahl beispielsweise im laufenden Betrieb gemessene Eingangsparameter darstellen, kann es sich bei der Austrittsspaltweite des Verstreckkanals und/oder bei der Stellung der Diffusorwände um vorgegebene Anlagenparameter als Eingangsparameter handeln. Grundsätzlich können die Eingangsparameter "Austrittsspaltweite des Verstreckkanals und/oder Stellung der Diffusorwände" aber auch im laufenden Betrieb gemessen werden. Es liegt im Rahmen der Erfindung, dass die Austrittsspaltweite des Verstreckkanals und/oder die Stellung der Diffusorwände im laufenden Betrieb der Anlage veränderbar bzw. einstellbar ist.

Vorzugsweise wird der Kabinendruck als Ausgangsparameter anhand von mindestens sechs, vorzugsweise mindestens sieben und bevorzugt anhand von zumindest acht Eingangsparametern ermittelt. Nach besonders bevorzugter Ausführungsform der Erfindung wird der Kabinendruck als Ausgangsparameter anhand von neun Eingangsparametern ermittelt. Dabei handelt es sich vorzugsweise um die neun Eingangsparameter "Schmelzetemperatur Tₛ, Monomervolumenstrom V̇_{M}, erste Gebläsedrehzahl nₐ, zweite Gebläsedrehzahl n_{b}, erste Prozesslufttemperatur Tₐ, zweite Prozesslufttemperatur T_{b}, Austrittsspaltweite a_{w}, des Verstreckkanals, Stellungen dₐ und d_{b} der Diffusorwände". Grundsätzlich könnten alternativ oder zusätzlich auch die Gebläsedrehmomente in die Ermittlung bzw. Berechnung des Ausgangsparameters einfließen. Wenn der auf die vorstehend beschriebene Weise ermittelte Kabinendruck als Ausgangsparameter von dem als Referenzparameter zugrunde gelegten Kabinendruck abweicht, wird eine Anomalie bzw. ein Störzustand signalisiert. - In Abhängigkeit von dem Anzeigen einer solchen Abweichung bzw. Anomalie kann dann die gesamte Anlage abgeschaltet werden und/oder einzelne Anlagenkomponenten können abgeschaltet werden und/oder die Einstellung einstellbarer Anlagenkomponenten wird gesteuert und/oder geregelt.

Der erfindungsgemäße Vergleich der Werte von Ausgangsparameter und Referenzparameter kann sich auch auf den Bereich der Ablageeinrichtung der erfindungsgemäßen Anlage beziehen. In diesem Zusammenhang lehrt die Erfindung insbesondere, dass die auf der Ablageeinrichtung abgelegte Vliesbahn verfestigt wird und zwar insbesondere mit Hilfe zumindest eines Kalanders verfestigt wird. Ein solcher Kalander weist zweckmäßigerweise zwei miteinander wechselwirkende Kalanderwalzen auf, wobei die Vliesbahn durch den Spalt zwischen den Kalanderwalzen geführt wird. Es liegt im Rahmen der Erfindung, dass zumindest eine dieser Kalanderwalzen beheizt wird. - Vorzugsweise wird in diesem Zusammenhang der zumindest eine Referenzparameter bzw. Ausgangsparameter aus der Gruppe "Festigkeit der Vliesbahn in Maschinenrichtung (MD), Festigkeit der Vliesbahn quer zur Maschinenrichtung (CD), Dehnbarkeit der Vliesbahn in Maschinenrichtung (MD), Dehnbarkeit der Vliesbahn quer zur Maschinenrichtung (CD), Vliesbahndicke" ausgewählt. Zweckmäßigerweise stammen dann die für die Ermittlung des Ausgangsparameters gemessenen bzw. vorgegebenen Eingangsparameter aus der Gruppe "Prozessluftdruck, Prozesslufttemperatur, Prozessluftvolumenstrom, Drehzahl zumindest einer Kalanderwalze, Kalandertemperatur zumindest einer Kalanderwalze, Kalandergravur, Geschwindigkeit des Ablagesiebbandes, Schmelzflussrate (MFI) des für die Fasern bzw. Filamente eingesetzten Kunststoffes". Bei der Kalandergravur bzw. der Art der Kalandergravur handelt es sich zweckmäßigerweise um einen als Anlagenparameter vorgegebenen Eingangsparameter, während die übrigen für die Auswertung hinzugezogenen Eingangsparameter vorzugsweise mit Messvorrichtungen gemessen werden.

Gemäß bevorzugter Ausführungsform der Erfindung ist die Ablageeinrichtung für die Ablage der Vliesbahn als Ablagesiebband ausgebildet, wobei das Ablagesiebband empfohlenermaßen als Endlosband betrieben bzw. bewegt wird. Derartige Ablagesiebbänder unterliegen im Betrieb einem gewissen Verschleiß bzw. einer gewissen Abnutzung. Fernerhin weist das Ablagesiebband eine Vielzahl von Siebbandöffnungen auf, die durch Verschmutzungen und dergleichen - beispielsweise durch beim Spinnen entstehende Monomere - verschlossen werden können. Auch die Abnutzung bzw. der Verschluss des Siebbandes können mit Hilfe der Ermittlung von Eingangsparametern erfasst werden. In diesem Zusammenhang zeichnet sich eine bevorzugte Ausführungsform des erfindungsgemäßen Verfahrens dadurch aus, dass die Ablageeinrichtung als Ablagesiebband ausgebildet ist, dass zumindest ein Referenzparameter bzw. Ausgangsparameter aus der Gruppe "Siebbandabnutzung, insbesondere Siebbandabrieb; Siebbandverschluss" ausgewählt wird und dass die Eingangsparameter Parameter aus der Gruppe "Prozessluftvolumenstrom der durch das Siebband gesaugten Prozessluft, Prozessluftgeschwindigkeit der durch das Siebband gesaugten Prozessluft, Siebbandgeschwindigkeit, Prozesslufttemperatur, Monomervolumenstrom" sind. Es liegt im Rahmen der Erfindung, dass mittels zumindest eines unter dem Ablagesiebband angeordneten Sauggebläses Prozessluft durch das Ablagesiebband im Ablagebereich der Fasern bzw. Filamente gesaugt wird. Dabei kann der Prozessluftvolumenstrom und/oder die Prozessluftgeschwindigkeit der durch das Siebband gesaugten Prozessluft gemessen bzw. bestimmt werden.

Eine empfohlene Ausführungsform des erfindungsgemäßen Verfahrens ist dadurch gekennzeichnet, dass eine Mehrzahl von Referenzparametern, insbesondere zumindest zwei und bevorzugt zumindest drei Referenzparameter zur Verfügung gestellt wird/werden und dass eine Mehrzahl bzw. Vielzahl von Eingangsparametern gemessen wird, aus welchen Eingangsparametern eine Mehrzahl von - den Referenzparametern entsprechenden - Ausgangsparametern ermittelt wird und dass bei einer Abweichung zumindest eines ermittelten Wertes eines Ausgangsparameters von zumindest einem Wert des Referenzparameters eine Anomalie des Ausgangsparameters bzw. der Ausgangsparameter signalisiert wird. Wie weiter oben bereits erläutert, kann dann auf die Erkennung der Abweichung bzw. Anomalie eine Reaktion erfolgen, indem die gesamte Anlage abgeschaltet wird und/oder zumindest eine Anlagenkomponente abgeschaltet wird und/oder eine Steuerung und/oder Regelung von einstellbaren Parametern der Anlagenkomponenten stattfindet. Wie ebenfalls oben bereits erläutert, liegt es im Rahmen der Erfindung, dass die Referenzparameter bzw. die Werte der Referenzparameter in einem Referenzbetrieb (störungsfreier Normalbetrieb) der Anlage gemessen werden. Fernerhin wurde bereits erläutert, dass zumindest ein Referenzparameter auch als Erfahrungswert vorgegeben werden kann. Somit ist es im Rahmen der Erfindung möglich, dass alle Referenzparameter in einem Referenzbetrieb der Anlage gemessen werden oder dass ein Teil der Referenzparameter im Referenzbetrieb der Anlage gemessen werden und ein anderer Teil der Referenzparameter als Erfahrungsparameter vorgegeben werden oder dass alle zugrunde gelegten Referenzparameter als Erfahrungsparameter vorgegeben werden. Nach besonders empfohlener Ausführungsform der Erfindung wird aus einer Mehrzahl von Referenzparametern ein Referenzmodell ermittelt. Bei diesem Referenzmodell handelt es sich gleichsam um ein Klassifikationsmodell, das aus den Messdaten des Referenzbetriebes (störungsfreier Normalbetrieb) ermittelt wird. Aus einer Mehrzahl bzw. Vielzahl von Eingangsparametern wird dann eine Mehrzahl von Ausgangsparametern berechnet und daraus wird wiederum ein Ausgangsmodell ermittelt. Bei Abweichung dieses Ausgangsmodells von dem Referenzmodell ist eine Anomalie des Ausgangsmodells erkennbar bzw. signalisierbar. Darauf kann - wie oben beschrieben - entsprechend reagiert werden.

Es liegt im Rahmen der Erfindung, dass es sich bei der Auswertungseinrichtung zur Ermittlung zumindest eines Ausgangsparameters aus den Eingangsparametern und zumindest einen Computer handelt. Die Übermittlung der gemessenen Werte der Eingangsparameter kann drahtgebunden oder drahtlos an die Auswertungseinrichtung bzw. an den Computer erfolgen.

Die einzelnen Messvorrichtungen bzw. Messsensoren zur Messung der Eingangsparameter sind in bzw. an den betreffenden Anlagenkomponenten der erfindungsgemäßen Vlieserzeugungsanlage angeordnet. Es liegt im Rahmen der Erfindung, dass die Eingangsparameter kontinuierlich oder im Wesentlichen kontinuierlich gemessen werden. Eine bevorzugte Ausführungsform der Erfindung ist dadurch gekennzeichnet, dass zumindest ein Teil, insbesondere der Großteil der Eingangsparameter und gemäß einer Ausführungsvariante alle Eingangsparameter laufend gemessen wird/werden und dass daraus der zumindest eine Ausgangsparameter bzw. das Ausgangsmodell ermittelt wird. Zweckmäßigerweise wird dabei mit einer Tastperiode von 0,5 s bis 10 min, vorzugsweise von 1 s bis 1 min und bevorzugt von 1 s bis 10 s gearbeitet. Nach einer Ausführungsvariante fließt in die Auswertung jedes gemessenen Eingangsparameters eine Mehrzahl bzw. eine Vielzahl von Messdaten ein. Dabei wird der Messwert des Eingangsparameters beispielsweise als Durchschnittswert aus diesen Messdaten gebildet. Für die Ermittlung des Messwertes jedes Eingangsparameters werden empfohlenermaßen mindestens 10 bis 20, bevorzugt 20 bis 50 und sehr bevorzugt mehr als 100 Messdaten bzw. Datenpunkte erfasst.

Der bevorzugt als Ausgangsparameter zugrunde gelegte Kabinendruck wird zweckmäßigerweise wie folgt ermittelt: Der zuständige Fachmann wählt zunächst die Eingangsparameter aus, die für den zu bestimmenden Kabinendruck maßgeblich sind bzw. diesen Kabinendruck maßgeblich beeinflussen. Dafür können potentiell über zwanzig Eingangsparameter in Frage kommen. Neun von diesen Eingangsparametern sind jedoch wesentlich für die Größe des Kabinendruckes und daher werden diese neun Eingangsparameter der Ermittlung des Ausgangsparameters zugrunde gelegt. - Der Kabinendruck wird zunächst im störungsfreien Normalzustand der Vlieserzeugungsanlage gemessen und der dabei erhaltene Messwert bzw. die dabei erhaltenen Messwerte werden als Referenzwert des Referenzparameters der weiteren Auswertung zugrunde gelegt. Fernerhin wird zweckmäßigerweise zumindest ein Werte-Satz bzw. Messwert-Satz für die neun Eingangsparameter im störungsfreien Normalbetrieb der Anlage ermittelt. Diese Daten bzw. Messdaten der Eingangsparameter - die gleichsam das Normalverhaltensmodell charakterisieren - werden vorzugsweise gespeichert - insbesondere in einer SQL-Datenbank gespeichert - und stehen somit jederzeit zur Verfügung. Gemäß einem bevorzugten Ausführungsbeispiel werden für die neun Eingangsparameter bezüglich des störungsfreien Normalbetriebes sowie für den Referenzparameter ca. 580.000 Datenpunkte mit einer Tastperiode von 1 s im störungsfreien Normalbetrieb erfasst (das entspricht ca. 161 Stunden der Produktion).

Nach der vorstehend beschriebenen Datenerfassung und Datenvalidierung wird zweckmäßigerweise ein Modellierungsverfahren angewandt. Um dessen Komplexität möglichst niedrig zu halten und die Interpretierbarkeit des Modells so hoch wie möglich zu halten, wird die Modellierung in der Regel mit einfachsten Modellierungsverfahren durchgeführt. So kann im vorliegenden Fall die lineare Regression mit dem Gradientenverfahren angewandt werden. Vorzugsweise wird das Modell in der analytischen Form (mathematische Gleichung) erstellt und im Hinblick auf das Ausführungsbeispiel des Kabinendrucks kann man von den neun Eingangsparametern (Variablen) sieben als lineare Terme wählen und zwei als quadratische Terme. Dann werden mit dem Gradientenverfahren die Parameter der Gleichung - d.h., die Multiplikationskoeffizienten der Eingangsgrößen und eine additive Konstante - geschätzt. Es ist darauf zu achten, dass die jeweilige Ausführung der Vlieserzeugungsanlage die Koeffizienten beeinflusst, so dass für höhere Genauigkeiten zweckmäßigerweise die Koeffizienten pro Vlieserzeugungsanlage bestimmt werden.

Anschließend wird das Modell validiert und dabei wird zweckmäßigerweise als Validierung die k-fache Kreuzvalidierung ausgewählt und zweckmäßigerweise wird k auf 10 gesetzt. Es sind dabei zwei Qualitätskriterien zu betrachten: Der mittlere absolute Fehler meanAE und der mittlere relative Fehler meanRE, beide als Durchschnitt von 10 Teilmengen der k-fachen Kreuzvalidierung berechnet. Die Genauigkeit des Modells wird über das Konfidenzintervall beschrieben. Die Ergebnisse mit den 95 % Konfidenzintervallen sind:
meanAE = 49,0132 ± 0,0774 Pa
meanRE = 1,6356% ± 0,0031 %.

Bei dieser Auswertung handelt es sich lediglich um eine bevorzugte Ausführungsvariante der Erfindung.

Zur Lösung des technischen Problems lehrt die Erfindung weiterhin eine Vlieserzeugungsanlage zur Erzeugung eines Vlieses aus Fasern, vorzugsweise zur Erzeugung eines Spunbond-Vlieses aus Endlosfilamenten oder zur Erzeugung eines Meltblown-Vlieses aus Endlosfilamenten, wobei zumindest eine Spinnvorrichtung zum Erspinnen der Fasern bzw. der Endlosfilamente vorgesehen ist, wobei gegebenenfalls weiterhin zumindest eine Kühlvorrichtung zum Kühlen der ersponnenen Fasern bzw. Endlosfilamente vorhanden ist, wobei vorzugsweise zumindest eine Verstreckeinrichtung zum Verstrecken der Fasern bzw. Endlosfilamente der Kühlvorrichtung nachgeschaltet ist und wobei zumindest eine Ablageeinrichtung, insbesondere ein Ablagesiebband zum Ablegen der Fasern bzw. Filamente zur Vliesbahn vorhanden ist,
wobei fernerhin zumindest eine Mehrzahl von Messvorrichtungen bzw. von Messsensoren zur Messung von zumindest zwei von einem Referenzparameter verschiedenen Eingangsparametern vorgesehen ist, wobei zumindest eine Messvorrichtung bzw. zumindest ein Messsensor im Bereich der Spinnvorrichtung und/oder im Bereich der Kühlvorrichtung und/oder im Bereich der Verstreckeinrichtung und/oder im Bereich zumindest eines Diffusors und/oder im Bereich der Ablageeinrichtung angeordnet ist, wobei weiterhin zumindest eine Auswertungseinrichtung vorhanden ist, die mit der Maßgabe eingerichtet ist, dass aus den gemessenen Eingangsparametern zumindest ein dem Referenzparameter entsprechender Ausgangsparameter ermittelbar ist. Nach bevorzugter Ausführungsform der Erfindung wird der ermittelte Ausgangsparameter mit dem bzw. mit einem zur Verfügung gestellten Referenzparameter verglichen. Gemäß empfohlener Ausführungsform ist zumindest eine Signaleinrichtung vorgesehen, mit der eine Abweichung des Ausgangsparameters von dem Referenzparameter signalisierbar ist. Es liegt im Rahmen der Erfindung, dass die Auswertungseinrichtung als Computer ausgebildet ist. Erfindungsgemäß ist eine Mehrzahl von Messvorrichtungen bzw. von Messsensoren zur Messung der Eingangsparameter vorhanden. Die Signaleinrichtung ist vorzugsweise als visuelle und/oder akustische Signaleinrichtung eingerichtet.

Es liegt weiterhin im Rahmen der Erfindung, dass zumindest ein Extruder zur Zuführung eines Kunststoffes bzw. einer Kunststoffschmelze zur Spinnvorrichtung vorgesehen ist. Zweckmäßigerweise ist zwischen Extruder und Spinnvorrichtung zumindest ein Reinigungssieb und/oder zumindest eine Schmelzepumpe für die Kunststoffschmelze angeordnet. Gemäß einer Ausführungsform der Erfindung ist zumindest eine Messvorrichtung bzw. zumindest ein Messsensor zur Messung eines Eingangsparameters im Bereich des Extruders und/oder im Bereich des Reinigungssiebes und/oder im Bereich der Schmelzepumpe positioniert.

Es empfiehlt sich, dass zumindest eine Messvorrichtung bzw. zumindest ein Messsensor zur Messung eines Eingangsparameters im Bereich der Spinnvorrichtung bzw. der Spinndüse angeordnet ist und zwar vorzugsweise zur Messung der Schmelzetemperatur der Kunststoffschmelze als Eingangsparameter. - Eine ganz besonders bewährte Ausführungsform der Erfindung zeichnet sich dadurch aus, dass die bevorzugt vorgesehene Kühlvorrichtung zumindest eine Kühlkammer und zumindest eine Luftzufuhrkabine für die Zuführung von Prozessluft bzw. Kühlluft in die Kühlkammer aufweist und dass Messvorrichtungen bzw. Messsensoren in der Kühlkammer und/oder in der Luftzufuhrkabine und/oder an zumindest einem Gebläse der Luftzufuhrkabine und/oder an zumindest einem Absaugungsspalt der Monomerabsaugung und/oder an einem Absaugungsgebläse der Monomerabsaugung angeordnet ist. Vorzugsweise ist in der Kühlkammer und/oder in der Luftzufuhrkabine zumindest ein Temperatursensor als Messsensor angeordnet, wobei mit diesem Temperatursensor bzw. Messsensor die Temperatur der Prozessluft bzw. Kühlluft als Eingangsparameter messbar ist. Zweckmäßigerweise ist an zumindest einem Gebläse der Luftzufuhrkabine zumindest ein Drehzahlmesssensor vorhanden. Mit diesem Drehzahlmesssensor wird die Gebläsedrehzahl als Eingangsparameter gemessen. Grundsätzlich könnte an dem Gebläse auch eine Messvorrichtung zur Messung des Drehmomentes des Gebläses vorgesehen sein. - Es empfiehlt sich, dass an zumindest einem Absaugungsspalt der Monomerabsaugung zumindest ein Messsensor zur Messung bzw. Ermittlung des Volumenstromes des durch den Absaugungsspalt abgesaugten Gases positioniert ist. Mit dem zumindest einen an der Monomerabsaugung angeordneten Messsensor kann auch die Öffnungsweite der Monomerabsaugung bestimmt werden und zwar kann nach einer bevorzugten Ausführungsform die Stellung eines Verschlusselementes, insbesondere die Stellung einer Verschlussklappe für den Absaugungsspalt bzw. für die Absaugungsspalte der Monomerabsaugung gemessen bzw. ermittelt werden. Daraus kann dann der Monomervolumenstrom berechnet werden. - Eine empfohlene Ausführungsform ist weiterhin dadurch gekennzeichnet, dass zumindest ein Messsensor an dem Austrittsspalt des Verstreckkanals angeordnet ist und vorzugsweise kann mit diesem Messsensor die Austrittsspaltweite des Verstreckkanals gemessen bzw. ermittelt werden. Es empfiehlt sich weiterhin, dass im Bereich der Diffusoren zumindest ein Messsensor, bevorzugt zumindest zwei Messsensoren positioniert sind und zwar vorzugsweise zur Messung bzw. Ermittlung der Stellungen bzw. Positionen der beiden Diffusorwände eines bevorzugt unterhalb der Verstreckeinrichtung vorgesehenen Diffusors. Es liegt im Rahmen der Erfindung, dass der Diffusor bzw. dass die Diffusorwände von der Verstreckeinrichtung zur Ablageeinrichtung hin divergieren und somit ein Öffnungswinkel zwischen den Diffusorwänden realisiert ist. Mit dem zumindest einen Messsensor bzw. mit den bevorzugt vorgesehenen beiden Messsensoren im Bereich des Diffusors kann also die Stellung der Diffusorwände und folglich auch der Öffnungswinkel des Diffusors bestimmt werden.

Eine besonders bevorzugte Ausführungsform der erfindungsgemäßen Vlieserzeugungsanlage ist dadurch gekennzeichnet, dass ein Aggregat bzw. das Aggregat aus der Kühlvorrichtung und der Verstreckeinrichtung als geschlossenes Aggregat ausgebildet ist. Geschlossenes Aggregat meint hier insbesondere, dass außer der Einführung der Prozessluft bzw. Kühlluft in der Kühlvorrichtung keine weitere Luftzufuhr in das Aggregat aus Kühlvorrichtung und Verstreckeinrichtung erfolgt. Das bevorzugte geschlossene Aggregat hat sich im Rahmen des erfindungsgemäßen Verfahrens bzw. der erfindungsgemäßen Anlage ganz besonders bewährt und führt zu besonders präzisen und reproduzierbaren Ergebnissen.

Der Erfindung liegt die Erkenntnis zugrunde, dass das erfindungsgemäße Verfahren und die erfindungsgemäße Anlage eine einfache und kostengünstige Möglichkeit bieten, um einen Störzustand bzw. eine Anomalie bei Vlieserzeugungsanlagen funktionssicher und präzise festzulegen bzw. anzuzeigen. Zur Realisierung dieser Maßnahmen sind lediglich relativ einfache, wenig komplexe und kostengünstige Anlagenkomponenten erforderlich. Bei Verwirklichung der erfindungsgemäßen Messungen und Auswertungen kann insbesondere der Betrieb der Anlage bzw. der Betrieb von Anlagenkomponenten bei Bedarf rechtzeitig eingestellt werden, um nachteilhafte gravierendere Schäden an der Anlage zu vermeiden, die zu längeren Stillstandzeiten führen würden. Störzustände bzw. Anomalien in der Anlage bzw. bei Durchführung des Verfahrens können zügig, eindeutig und präzise auf einfache Weise angezeigt bzw. signalisiert werden. Aufgrund der eindeutigen und schnellen Erkennung von Abweichungen zwischen Referenzparametern und Ausgangsparametern kann bei Bedarf eine gezielte Steuerung und/oder Regelung von Anlagenkomponenten vorgenommen werden, um den Abweichungen bzw. Anomalien entgegenzuwirken und den Normalzustand wieder herzustellen. Insgesamt zeichnen sich die erfindungsgemäßen Maßnahmen durch geringen Aufwand und geringe Kosten aus.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine Anlage zur Erzeugung eines Spunbond-Vlieses,
- Fig. 2: einen vergrößerten Ausschnitt aus Fig. 1 und
- Fig. 3: ein Verfahrensschema für die Durchführung des erfindungsgemäßen Verfahrens.

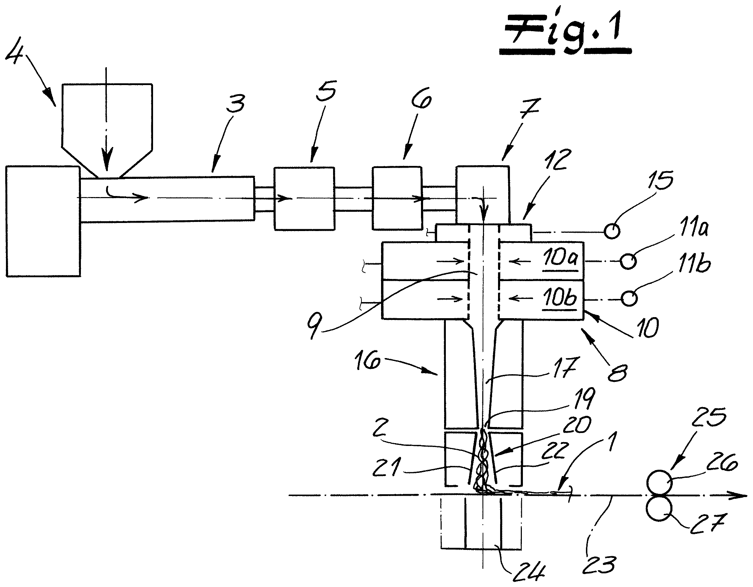

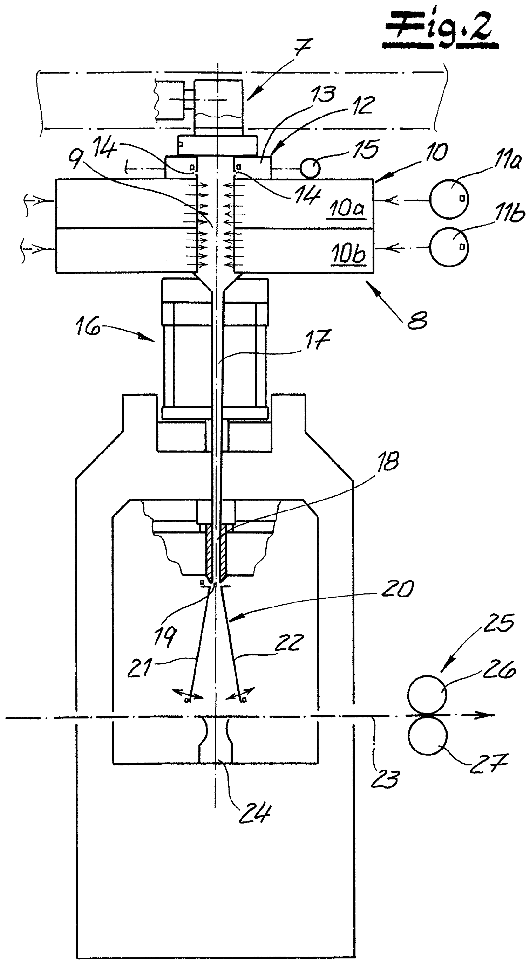

Die Fig. 1 und 2 zeigt eine erfindungsgemäße Anlage zur Erzeugung eines Spunbond-Vlieses 1. Mit dieser Anlage werden Endlosfilamente 2 nach dem Spunbond-Verfahren ersponnen und zum Spinnvlies bzw. Spundbond-Vlies 1 abgelegt. Die Endlosfilamente 2 werden zweckmäßigerweise aus thermoplastischem Kunststoff erzeugt und der Kunststoff bzw. die Kunststoffschmelze wird dabei bevorzugt und im Ausführungsbeispiel von einem Extruder 3 einer Spinnvorrichtung 7 in Form einer Spinnerette zugeführt. Dazu wird der Kunststoff vorzugsweise in Form von Kunststoffgranulat über einen Dosiertrichter 4 in den Extruder 3 eingeführt. Von dem Extruder 3 wird die Kunststoffschmelze durch einen Filter in Form eines Reinigungssiebes 5 geführt und mittels einer Schmelzepumpe 6 der Spinnvorrichtung 7 zugeleitet. Mittels dieser Spinnvorrichtung 7 werden die Endlosfilamente 2 ersponnen und anschließend bevorzugt und im Ausführungsbeispiel zur Kühlung durch eine Kühlvorrichtung 8 geführt. Die Kühlvorrichtung 8 weist zweckmäßigerweise eine Kühlkammer 9 auf sowie eine neben der Kühlkammer 6 angeordnete Luftzufuhrkabine 10. Die Luftzufuhrkabine 10 ist bevorzugt und im Ausführungsbeispiel in einen oberen Kabinenabschnitt 10a und einen unteren Kabinenabschnitt 10b unterteilt. Aus den beiden Kabinenabschnitten 10a, 10b ist vorzugsweise Prozessluft bzw. Kühlluft unterschiedlicher Temperatur zuführbar. Zweckmäßigerweise ist jedem Kabinenabschnitt 10a, 10b der Luftzufuhrkabine 10 ein Gebläse 11a, 11b zur Zuführung der Prozessluft zugeordnet. Die beiden Gebläse 11a und 11b sind bevorzugt unabhängig voneinander betreibbar und weisen jeweils eine Gebläsedrehzahl nₐ bzw. n_{b} sowie jeweils ein Gebläsedrehmoment Iₐ bzw. I_{b} auf. Aus dem oberen Kabinenabschnitt 10a der Luftzufuhrkabine 10 wird im Ausführungsbeispiel Prozessluft der Prozesslufttemperatur Tₐ zugeführt und über den unteren Kabinenabschnitt 10b der Luftzufuhrkabine 10 wird Prozessluft der Prozesslufttemperatur T_{b} zugeführt, wobei die beiden Temperaturen Tₐ und T_{b} vorzugsweise unterschiedlich sind. Nach bevorzugter Ausführungsform der Erfindung werden die Gebläsedrehzahlen nₐ und n_{b} sowie die Prozesslufttemperaturen Tₐ und T_{b} als Eingangsparameter gemessen, um als Ausgangsparameter den Kabinendruck zu ermitteln. Das wird weiter unten noch näher erläutert.

Zwischen der Spinnvorrichtung 7 und der Kühlvorrichtung 8 ist nach besonders bevorzugter Ausführungsform eine Monomerabsaugungsvorrichtung 12 vorgesehen. In dieser Monomerabsaugungsvorrichtung 12 werden beim Spinnprozess auftretende störende Gase aus der Anlage bzw. aus dem Filamentbildungsraum entfernt bzw. abgesaugt. Vorzugsweise und im Ausführungsbeispiel weist die Monomerabsaugungsvorrichtung 12 zumindest eine Absaugungskammer 13 mit zwei gegenüberliegenden Absaugungsspalten 14 auf. Fernerhin ist die Monomerabsaugungsvorrichtung 12 bzw. die Absaugungskammer 14 mit einem Absaugungsgebläse 15 ausgestattet. - Wenn der Kabinendruck als Ausgangsparameter ermittelt werden soll, wird vorzugsweise die Öffnungsweite der Absaugungsspalte 14 herangezogen. Die Öffnungsweite der Monomerabsaugung bzw. der Absaugungsspalte 14 wird zweckmäßigerweise mittels zumindest eines Verschlusselementes, insbesondere mittels einer in den Figuren nicht dargestellter Verschlussklappe eingestellt. Als Eingangsparameter kann die Stellung dieses Verschlusselementes bzw. der Verschlussklappe gemessen werden. Nach einer Ausführungsvariante der Erfindung kann daraus der abgesaugte Monomervolumenstrom V̇_{M} der in der Monomerabsaugungsvorrichtung abgesaugten Gase bestimmt werden und gegebenenfalls als Eingangsparameter verwendet werden. - Grundsätzlich könnte auch die Gebläsedrehzahl n_{M} des Absaugungsgebläses 15 der Monomerabsaugung als Eingangsparameter in die Bestimmung eines Ausgangsparameters, insbesondere in die Bestimmung des Kabinendrucks als Ausgangsparameter einfließen. Bevorzugt wird jedoch die Stellung der nicht dargestellten Verschlussklappe an dem Absaugungsspalt 14 bzw. an den Absaugungsspalten 1 als Eingangsparameter für die Bestimmung des Kabinendrucks als Ausgangsparameter eingesetzt.

Aus der Kühlkammer 9 werden die Endlosfilamente 2 zweckmäßigerweise in die Verstreckeinrichtung 16 eingeführt, wobei diese Verstreckeinrichtung 16 bevorzugt einen Zwischenkanal 17 und einen daran angeschlossenen Verstreckkanal 18 aufweist. Der Zwischenkanal 17 ist vorzugsweise und im Ausführungsbeispiel in Filamentströmungsrichtung konvergierend ausgebildet. Gemäß sehr empfohlener Ausführungsform und im Ausführungsbeispiel ist das Aggregat aus der Kühlvorrichtung 8 und der Verstreckeinrichtung 16 als geschlossenes Aggregat ausgebildet und außer der Zuführung der Prozessluft bzw. Kühlluft in der Kühlkammer 9 findet in diesem geschlossenen Aggregat keine weitere Luftzufuhr von außen statt. Der Verstreckkanal 18 weist an seinem unteren Ende den Austrittsspalt 19 auf, durch den die Endlosfilamente 2 und die Prozessluft die Verstreckeinrichtung 16 verlassen. Die Austrittsspaltweite a_{w} des Verstreckkanals 18 (Weite des Austrittsspaltes 19 in Maschinenrichtung MD bzw. in Förderrichtung der Spinnvliesbahn) wird vorzugsweise als Eingangsparameter gemessen bzw. zugrunde gelegt, wenn nach bevorzugter Ausführungsform der Kabinendruck als Ausgangsparameter bestimmt werden soll. Auch das wird weiter unten noch näher erläutert.

Die den Verstreckkanal 18 verlassenden Endlosfilamente 2 werden anschließend zweckmäßigerweise durch zumindest einen Diffusor 20 geführt. Grundsätzlich könnten in Filamentströmungsrichtung auch zwei Diffusoren 20 hintereinander bzw. untereinander angeordnet sein. - Der im Ausführungsbeispiel vorgesehene Diffusor 20 weist nach unten hin divergierend angeordnete Diffusorwände 21, 22 auf. Nach empfohlener Ausführungsform der Erfindung werden die Stellungen dₐ und d_{b} der Diffusorwände 21, 22 detektiert bzw. gemessen und gehen als Eingangsparameter in die Berechnung des Ausgangsparameters ein, insbesondere wenn nach bevorzugter Ausführungsform der Kabinendruck der zu bestimmende Ausgangsparameter ist.

Die aus dem Diffusor 20 austretenden Endlosfilamente 2 werden dann vorzugsweise zur Vliesbahn auf einer als Ablagesiebband 23 ausgebildeten Ablageeinrichtung abgelegt. Dabei wird empfohlenermaßen mittels zumindest eines unter dem Ablagesiebband 23 angeordneten Sauggebläses 24 Prozessluft durch das Ablagesiebband 23 im Ablagebereich der Endlosfilamente 2 abgesaugt. Die auf der Ablageeinrichtung bzw. auf dem Ablagesiebband 23 abgelegte Vliesbahn wird vorzugsweise verfestigt. Zweckmäßigerweise und im Ausführungsbeispiel erfolgt diese Verfestigung mit Hilfe eines Kalanders 25, der zwei miteinander wechselwirkende Kalanderwalzen 26, 27 aufweist. Von diesen Kalanderwalzen 26, 27 ist zweckmäßigerweise zumindest eine Kalanderwalze 26 beheizt. Die Verfestigung in dem Kalander 25 kann als Vorverfestigung der Vliesbahn durchgeführt werden und im Anschluss an diese Vorverfestigung kann eine Endverfestigung - beispielsweise als Wasserstrahlverfestigung oder dergleichen - erfolgen. - Die Vliesbahn bzw. das auf diese Weise erzeugte Spunbond-Vlies 1 wird im Anschluss daran zweckmäßigerweise mittels eines in den Figuren nicht dargestellten Wicklers zu einer Vliesrolle aufgewickelt.

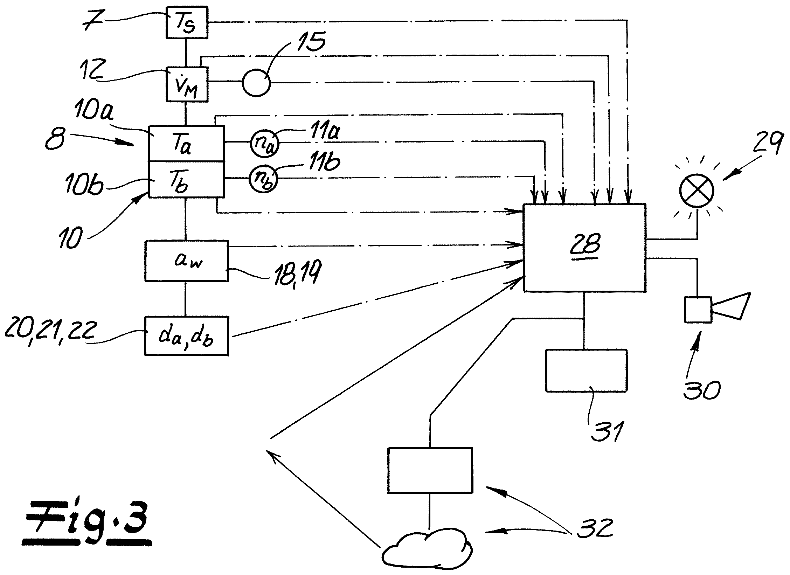

Die Fig. 3 veranschaulicht die erfindungsgemäße Verfahrensweise zur Bestimmung eines Ausgangsparameters schematisch. Gleiche Anlagenkomponenten sind hier mit den gleichen Bezugsziffern versehen wie in den Fig. 1 und 2. Im vorliegenden Ausführungsbeispiel soll der Kabinendruck in der Luftzufuhrkabine 10 als Ausgangsparameter bestimmt werden. Nach bevorzugter Ausführungsform der Erfindung wird zunächst ein Kabinendruck pₖ in einem Referenzbetrieb bzw. in einem störungsfreien Normalbetrieb der erfindungsgemäßen Anlage gemessen. Dazu mag als Referenzmessvorrichtung in den oberen Kabinenabschnitt 10a der Luftzufuhrkabine 10 ein Drucksensor vorgesehen sein. Der mit diesem Drucksensor im störungsfreien Normalbetrieb gemessene Kabinendruck pₖ wird der nachfolgenden Auswertung als Referenzparameter zugrunde gelegt. Anschließend wird als Ausgangsparameter ein Kabinendruck pₖ mit Hilfe von insgesamt neun Eingangsparametern ermittelt und dieser als Ausgangsparameter ermittelte Kabinendruck pₖ wird mit dem Referenzwert des Kabinendruckes pₖ verglichen.

Als erster Eingangsparameter wird die Schmelzetemperatur Ts der Kunststoffschmelze an der Spinnvorrichtung 7 gemessen. Hier kann auch die Düsentemperatur der Spinnvorrichtung 7 ersatzweise gemessen werden. Hierzu ist zweckmäßigerweise im Bereich der Spinnvorrichtung 7 bzw. an der Spinndüse ein Temperatursensor als Messvorrichtung bzw. Messsensor vorhanden. Es versteht sich, dass für die nachfolgend beschriebenen Messungen ebenfalls entsprechende Messvorrichtungen bzw. Messsensoren zur Messung der Eingangsparameter an entsprechenden Stellen angeordnet sein können. - Weiterhin fließt der Monomervolumenstrom V̇_{M} in die Ermittlung des Ausgangsparameters ein. Dazu wird an der Monomerabsaugungsvorrichtung 12 - in der der Monomervolumenstrom V̇_{M} abgesaugt wird - die Stellung der Verschlussklappe bzw. der Verschlussklappen am Absaugungsspalt 14 bzw. an den Absaugungsspalten 14 gemessen bzw. detektiert. Diese Stellung der Verschlussklappe (n) kann unmittelbar in die Ermittlung des Ausgangsparameters einfließen oder aus der Stellung der Verschlussklappe (n) wird der Monomervolumenstrom V̇_{M} berechnet und dieser fließt in die Bestimmung des Ausgangsparameters ein. Damit stehen bereits zwei Eingangsparameter (Schmelzetemperatur Ts und Stellung der Verschlussklappen bzw. Monomervolumenstrom V̇_{M} zur Verfügung.

Weitere Eingangsparameter ergeben sich aus Messungen im Bereich der Luftzufuhrkabine 10. Zweckmäßigerweise und im Ausführungsbeispiel wird in dem oberen Kabinenabschnitt 10a Prozessluft mit der Prozesslufttemperatur Tₐ zugeführt und in dem unteren zweiten Kabinenabschnitt 10b Prozessluft mit der Prozesslufttemperatur T_{b} zugeführt. Beide Prozesslufttemperaturen Tₐ und T_{b} werden vorzugsweise mit Hilfe von als Temperatursensoren ausgebildeten Messvorrichtungen als Eingangsparameter gemessen. Fernerhin werden die beiden Prozessluftströme in den beiden Kabinenabschnitten 10a und 10b mit Hilfe der beiden Gebläse 11a und 11b zugeführt. Die beiden Gebläsedrehzahlen nₐ und n_{b} werden ebenfalls - bevorzugt mit geeigneten Messsensoren - als Eingangsparameter gemessen und fließen in die Bestimmung des Ausgangsparameters ein. Durch Messungen im Bereich der Luftzufuhrkabine 10 stehen also weitere vier Eingangsparameter zur Ermittlung des Ausgangsparameters zur Verfügung.

Die Austrittsspaltweite a_{w} des Austrittsspaltes 19 am unteren Ende des Verstreckkanals 18 bildet einen weiteren Eingangsparameter, der entweder gemessen oder als fester Anlagenparameter vorgegeben wird. Fernerhin bilden die Stellungen dₐ und d_{b} der beiden divergierenden Diffusorwände 21 und 22 des Diffusors 20 Eingangsparameter, die zur Ermittlung des Ausgangsparameters (Kabinendruck) verwendet werden. Diese beiden Eingangsparameter dₐ und d_{b} werden entweder gemessen bzw. detektiert oder ebenfalls als feste Anlagenparameter vorgegeben.

Alle neun Eingangsparameter T_{S}, V_{M}, Tₐ, T_{b}, nₐ, n_{b}, a_{w}, dₐ und d_{b} werden nach empfohlener Ausführungsform der Erfindung einer als Computer ausgebildeten Auswertungseinrichtung 28 zugeführt. Hier wird aus den neun Eingangsparametern der Kabinendruck pₖ als Ausgangsparameter ermittelt bzw. berechnet und der Wert dieses Ausgangsparameters wird zweckmäßigerweise mit dem Wert des als Referenzparameter gemessenen Kabinendrucks verglichen. Es empfiehlt sich, dass die vorgenannten Messungen bzw. Bestimmungen der Eingangsparameter, die Ermittlung des Ausgangsparameters aus diesen Eingangsparametern und der Vergleich des Wertes des Ausgangsparameters mit dem Wert des Referenzparameters laufend im Betrieb der Anlage durchgeführt werden. Auf diese Weise kann mittels der Auswertungseinrichtung 28 eine Abweichung zwischen den Druckwerten von Ausgangsparameter und Referenzparameter erkannt werden und bevorzugt wird eine dabei auftretende nennenswerte Anomalie signalisiert. Es liegt im Rahmen der Erfindung, dass die Signalisierung mittels einer visuellen Signaleinrichtung 29 und/oder mittels einer akustischen Signaleinrichtung 30 erfolgt. Die Signalisierung einer Anomalie kann alternativ oder zusätzlich über ein HMI 31 (Human Machine Interface) und/oder durch eine Cloud-Anbindung 32 (per E-Mail, SMS und dergleichen) vermittelt werden.

Nach einer empfohlenen Ausführungsform wird bei der Auswertung wie folgt verfahren: Es wird zunächst ermittelt, welcher Werte-Satz von Eingangsparametern - im bevorzugten Ausführungsbeispiel also ein Satz von neun Werten von neun Eingangsparametern - bzw. welche Werte-Sätze von Eingangsparametern zu dem im störungsfreien Normalbetrieb gemessenen Wert des Referenzparameters passen. Im laufenden Betrieb der Anlage werden dann die jeweils gemessenen bzw. ermittelten aktuellen Werte-Sätze der Eingangsparameter mit dem dem Referenzwert des Referenzparameters entsprechenden Werte-Satz an Eingangsparametern verglichen. Wenn eine Übereinstimmung bzw. eine quasi-Übereinstimmung festgestellt wird, erfolgt zweckmäßigerweise keine Alarmmeldung. Bei Feststellung einer Abweichung bzw. Anomalie wird diese dagegen signalisiert bzw. es wird eine entsprechende Alarmmeldung signalisiert bzw. gesendet.

Die Feststellung bzw. Signalisierung einer Abweichung/Anomalie ermöglicht es dem Betreiber der Anlage die Anlage bei Bedarf rechtzeitig abzuschalten, beispielsweise den Zwischenkanal von darin hängengebliebenen Filamenten zu befreien und anschließend die Produktion erneut zu starten. Damit wird vermieden, dass es zu Schäden an der Anlage oder zu längeren unerwarteten Stillstandzeiten kommt. Grundsätzlich kann nach Erkennen bzw. Signalisierung einer Anomalie auch durch Steuerung und/oder Regelung auf einzelne Anlagenkomponenten eingewirkt werden, um die Anomalie bzw. Abweichung zu beseitigen.

## Patentansprüche

1. Verfahren zur Erzeugung eines Vlieses aus Fasern in einer Vlieserzeugungsanlage, insbesondere zur Erzeugung eines Spunbond-Vlieses aus Endlosfilamenten oder zur Erzeugung eines Meltblown-Vlieses aus Endlosfilamenten, wobei die Fasern bzw. die Filamente mittels zumindest einer Spinnvorrichtung ersponnen werden, gegebenenfalls im Anschluss daran mittels zumindest einer Kühlvorrichtung gekühlt werden, vorzugsweise verstreckt werden und auf einer Ablageeinrichtung als Vliesbahn abgelegt werden,
**dadurch gekennzeichnet, dass** zumindest ein Referenzparameter zur Verfügung gestellt wird, dass im laufenden Betrieb der Anlage zumindest zwei, vorzugsweise zumindest drei von dem Referenzparameter verschiedene Eingangsparameter mit Hilfe von Messvorrichtungen gemessen werden und dass aus diesen gemessenen Eingangsparametern mittels zumindest einer Auswertungseinrichtung ein dem Referenzparameter entsprechender Ausgangsparameter ermittelt wird.

2. Verfahren nach Anspruch 1, **dadurch gekennzeichnet, dass** der ermittelte Ausgangsparameter mit dem Referenzparameter verglichen wird, insbesondere laufend verglichen wird.

3. Verfahren nach einem der Ansprüche 1 oder 2 , **dadurch gekennzeichnet, dass** bei einer Abweichung zumindest eines ermittelten Wertes des Ausgangsparameters von dem zumindest einen Wert bzw. Messwert des Referenzparameters eine Anomalie des Ausgangsparameters durch zumindest ein Signal, insbesondere durch ein visuelles und/oder akustisches Signal angezeigt wird und dass vorzugsweise die Anomalie dokumentiert und zweckmäßigerweise in einem unabhängigen Speicher gespeichert wird.

4. Verfahren nach einem der Ansprüche 1 bis 3, **dadurch gekennzeichnet, dass** der zumindest eine Referenzparameter mit zumindest einer Referenzmessvorrichtung in einem Referenzbetrieb der Vlieserzeugungsanlage gemessen wird und/oder dass der Referenzparameter als Erfahrungsparameter vorgegeben wird.

5. Verfahren nach einem der Ansprüche 1 bis 4, **dadurch gekennzeichnet, dass** zumindest ein Eingangsparameter als fester bzw. konstanter Anlagenparameter vorgegeben wird und zur Ermittlung des Ausgangsparameters eingesetzt wird und dass die weiteren Eingangsparameter gemessen werden.

6. Verfahren nach einem der Ansprüche 1 bis 5, **dadurch gekennzeichnet, dass** zumindest ein Referenzparameter bzw. der Referenzwert des Referenzparameters berechnet wird und vorzugsweise dem Vergleich mit dem Ausgangsparameter zugrunde gelegt wird und/oder dass zumindest ein Eingangsparameter berechnet wird, wobei dieser berechnete Eingangsparameter in die Ermittlung des Ausgangsparameters eingeht.

7. Verfahren nach einem der Ansprüche 1 bis 6, **dadurch gekennzeichnet, dass** die Fasern bzw. Filamente aus thermoplastischem Kunststoff erzeugt werden, dass der Kunststoff mittels zumindest eines Extruders der Spinnvorrichtung zugeführt wird, dass vorzugsweise der aus dem Extruder austretende Kunststoff bzw. schmelzflüssige Kunststoff mit Hilfe einer Schmelzepumpe der Spinnvorrichtung zugeführt wird, dass der zumindest eine Referenzparameter bzw. Ausgangsparameter zumindest ein den eingesetzten Kunststoff betreffender Parameter aus der Gruppe "Rohstoffdichte, Schüttdichte, Dosierungsmenge, Schmelzedichte, Förderrate, Schmelzeleckage" ist und dass die Eingangsparameter aus der Gruppe "Schmelzedruck, Extrudertemperatur, Extruderdrehzahl, Extruderdrehmoment, Pumpendrehzahl, Schmelzetemperatur" ausgewählt werden.

8. Verfahren nach Anspruch 7, **dadurch gekennzeichnet, dass** der schmelzflüssige Kunststoff in Förderrichtung vor der Spinnvorrichtung durch zumindest ein Reinigungssieb geführt wird und das die Eingangsparameter aus der Gruppe bzw. zusätzlich aus der Gruppe "Schmelzedruck vor dem Reinigungssieb, Schmelzedruck hinter dem Reinigungssieb, Betriebsstunden des Reinigungssiebes" ausgewählt werden.

9. Verfahren nach einem der Ansprüche 1 bis 8, **dadurch gekennzeichnet, dass** das Vlies als Spunbond-Vlies aus Endlosfilamenten erzeugt wird, dass die Filamente mittels zumindest einer Spinnerette ersponnen werden, dass die ersponnenen Filamente in zumindest einer Kühlkammer oder Kühlvorrichtung gekühlt werden, dass in die Kühlkammer aus zumindest einer Luftzufuhrkabine Prozessluft mittels zumindest eines Gebläses einführbar ist, dass zwischen Spinnerette und Kühlkammer vorzugsweise eine Monomerabsaugung durchgeführt wird, dass die Filamente verstreckt werden und im Anschluss daran auf einer Ablageeinrichtung, insbesondere auf einem Ablagesiebband abgelegt werden.

10. Verfahren nach einem der Ansprüche 1 bis 9, **dadurch gekennzeichnet, dass** der Referenzparameter bzw. Ausgangsparameter der Kabinendruck der Luftzufuhrkabine ist und wobei die Eingangsparameter Parameter aus der Gruppe "Schmelzetemperatur, Monomervolumenstrom, Prozesslufttemperatur, Gebläsedrehzahl, Austrittsspaltweite des Verstreckkanals, Stellungen der Diffusorwände eines Diffusors" ausgewählt werden.

11. Verfahren nach einem der Ansprüche 1 bis 10, **dadurch gekennzeichnet, dass** die auf der Ablageeinrichtung abgelegte Vliesbahn verfestigt wird, insbesondere mit Hilfe zumindest eines Kalanders verfestigt wird, dass der zumindest eine Referenzparameter bzw. Ausgangsparameter aus der Gruppe "Festigkeit der Vliesbahn in Maschinenrichtung (MD), Festigkeit der Vliesbahn quer zur Maschinenrichtung (CD), Dehnbarkeit der Vliesbahn in Maschinenrichtung (MD), Dehnbarkeit der Vliesbahn quer zur Maschinenrichtung (CD), Vliesbahndicke" ausgewählt wird und dass die Eingangsparameter aus der Gruppe "Prozessluftdruck Prozesslufttemperatur, Prozessluftvolumenstrom, Drehzahl zumindest einer Kalanderwalze, Kalandertemperatur zumindest einer Kalanderwalze, Kalandergravur, Geschwindigkeit des Ablagesiebbandes, Schmelzflussrate (MFI) des für die Fasern bzw. Filamente eingesetzten Kunststoffes" ausgewählt werden.

12. Verfahren nach einem der Ansprüche 1 bis 11, **dadurch gekennzeichnet, dass** die Ablageeinrichtung als Ablagesiebband ausgebildet ist, dass zumindest ein Referenzparameter bzw. Ausgangsparameter aus der Gruppe "Siebbandabnutzung, insbesondere Siebbandabrieb; Siebbandverschluss" ausgewählt wird und dass die Eingangsparameter aus der Gruppe "Prozessluftvolumenstrom der durch das Siebband gesaugten Prozessluft, Prozessluftgeschwindigkeit der durch das Siebband gesaugten Prozessluft, Siebbandgeschwindigkeit, Prozesslufttemperatur, Monomervolumenstrom" ausgwählt werden.

13. Verfahren nach einem der Ansprüche 1 bis 12, **dadurch gekennzeichnet, dass** eine Mehrzahl von Referenzparametern, nämlich zumindest zwei Referenzparameter, vorzugsweise zumindest drei Referenzparameter zur Verfügung gestellt wird/werden und dass eine Vielzahl von Eingangsparametern gemessen wird, aus welchen Eingangsparametern eine Mehrzahl von den Referenzparametern entsprechenden Ausgangsparametern ermittelt wird und dass bei einer Abweichung zumindest eines ermittelten Wertes eines Ausgangsparameters von zumindest einem Wert des Referenzparameters eine Anomalie des Ausgangsparameters signalisiert wird.

14. Verfahren nach Anspruch 13, **dadurch gekennzeichnet, dass** aus der Mehrzahl von Referenzparametern ein Referenzmodell ermittelt wird und dass aus der Vielzahl von Eingangsparametern ein Ausgangsmodell ermittelt wird und dass bei Abweichung des Ausgangsmodells von dem Referenzmodell eine Anomalie des Ausgangsmodells signalisiert wird.

15. Verfahren nach einem der Ansprüche 1 bis 14, **dadurch gekennzeichnet, dass** zumindest ein Teil, insbesondere der Großteil der Eingangsparameter laufend gemessen wird und daraus der zumindest ein Ausgangsparameter bzw. das Ausgangsmodell ermittelt wird und dass zweckmäßigerweise dabei mit einer Tastperiode von 0,5 s bis 10 min, vorzugsweise von 1s bis 1min gearbeitet wird.

16. Vlieserzeugungsanlage zur Erzeugung eines Vlieses aus Fasern, vorzugsweise zur Erzeugung eines Spunbond-Vlieses aus Endlosfilamenten oder zur Erzeugung eines Meltblown-Vlieses aus Endlosfilamenten, - insbesondere zur Durchführung eines Verfahrens nach einem der Ansprüche 1 bis 15 -, wobei zumindest eine Spinnvorrichtung zum Erspinnen der Fasern bzw. Filamente vorgesehen ist, wobei gegebenenfalls zumindest eine Kühlvorrichtung zum Kühlen der ersponnenen Fasern bzw. Filamente vorhanden ist, wobei vorzugsweise zumindest eine Verstreckeinrichtung zum Verstrecken der Fasern bzw. Filamente vorgesehen ist und wobei zumindest eine Ablageeinrichtung, insbesondere ein Ablagesiebband zum Ablegen der Fasern bzw. Filamente zur Vliesbahn vorhanden ist,
**dadurch gekennzeichnet, dass** fernerhin eine Mehrzahl von Messvorrichtungen bzw. von Messsensoren zur Messung von zumindest zwei von einem Referenzparameter verschiedenen Eingangsparametern vorgesehen ist, dass zumindest eine Messvorrichtung bzw. zumindest ein Messsensor im Bereich der Spinnvorrichtung und/oder im Bereich der Kühlvorrichtung und/oder im Bereich der Verstreckeinrichtung und/oder im Bereich zumindest eines Diffusors und/oder im Bereich der Ablageeinrichtung angeordnet ist, dass weiterhin zumindest eine Auswertungseinrichtung vorhanden ist, die mit der Maßgabe eingerichtet ist, dass aus den gemessenen Eingangsparametern ein dem Referenzparameter entsprechender Ausgangsparameter ermittelbar ist.

17. Anlage nach Anspruch 16, **dadurch gekennzeichnet, dass** der ermittelte Ausgangsparameter mit zumindest einem zur Verfügung gestellten Referenzparameter vergleichbar ist.

18. Anlage nach Anspruch 17, **dadurch gekennzeichnet, dass** zumindest eine Signaleinrichtung vorgesehen ist, mit der eine Abweichung des Ausgangsparameters von dem Referenzparameter signalisierbar ist.

19. Anlage nach einem der Ansprüche 16 bis 18, **dadurch gekennzeichnet, dass** zumindest ein Extruder zur Zuführung eines Kunststoffes bzw. einer Kunststoffschmelze zur Spinnvorrichtung vorgesehen ist, wobei vorzugsweise zwischen Extruder und Spinnvorrichtung zumindest ein Reinigungssieb und/oder zumindest eine Schmelzepumpe angeordnet ist, dass die zumindest eine Messvorrichtung bzw. der zumindest eine Messsensor im Bereich des Extruders und/oder im Bereich der Schmelzepumpe und/oder im Bereich des Reinigungssiebes positioniert ist.

20. Anlage nach einem der Ansprüche 16 bis 19, **dadurch gekennzeichnet, dass** die Kühlvorrichtung zumindest eine Kühlkammer und zumindest eine Luftzufuhrkabine zur Zuführung von Prozessluft in die Kühlkammer aufweist und dass die zumindest eine Messvorrichtung bzw. der zumindest eine Messsensor in der Kühlkammer und/oder in der Luftzufuhrkabine und/oder an zumindest einem Gebläse der Luftzufuhrkabine und/oder an zumindest einem Absaugungsspalt der Monomerabsaugung und/oder an zumindest einem Absaugungsgebläse der Monomerabsaugung angeordnet sind.

21. Anlage nach einem der Ansprüche 16 bis 20, **dadurch gekennzeichnet, dass** ein bzw. das Aggregat aus Kühlvorrichtung und Verstreckeinrichtung als geschlossenes Aggregat ausgebildet ist und dass außer der Einführung der Prozessluft in der Kühlvorrichtung keine weitere Luftzufuhr in dieses Aggregat erfolgt.

## Claims

1. Method for producing a nonwoven fabric from fibres in a nonwoven production system, in particular for producing a spun-bonded nonwoven from continuous filaments or for producing a melt-blown nonwoven from continuous filaments, wherein the fibres or the filaments are spun by means of at least one spinning device, optionally then cooled by means of at least one cooling device, preferably stretched and deposited on a depositing device as a nonwoven web,
**characterized in that** at least one reference parameter is provided, that during continuous operation of the system, at least two, preferably at least three input parameters which are different from the reference parameter are measured with the aid of measuring devices and that an output parameter corresponding to the reference parameter is determined from these measured input parameters by means of at least one evaluation device.

2. Method according to Claim 1, **characterized in that** the determined output parameter is compared with the reference parameter, in particular is compared continuously.

3. Method according to one of Claims 1 or 2, **characterized in that** in the event of a deviation of at least one determined value of the output parameter from the at least one value or measured value of the reference parameter, an anomaly of the output parameter is indicated by at least one signal, in particular by a visual and/or acoustic signal and that preferably the anomaly is documented and expediently is stored in an independent storage device.

4. Method according to one of Claims 1 to 3, **characterized in that** the at least one reference parameter is measured by means of at least one reference measuring device in a reference operation of the nonwoven production system and/or that the reference parameter is predefined as an empirical parameter.

5. Method according to one of Claims 1 to 4, **characterized in that** at least one input parameter is predefined as a fixed or constant system parameter and is used to determine the output parameter and that the further input parameters are measured.

6. Method according to one of Claims 1 to 5, **characterized in that** at least one reference parameter or the reference value of the reference parameter is calculated and is preferably used as the basis for the comparison with the output parameter and/or that at least one input parameter is calculated, wherein this calculated input parameter is used in the determination of the output parameter.

7. Method according to one of Claims 1 to 6, **characterized in that** the fibres or filaments are produced of thermoplastic material, that the plastic is fed to the spinning device by means of at least one extruder, that preferably the plastic or molten plastic emerging from the extruder is fed to the spinning device with the aid of a melt pump, that the at least one reference parameter or output parameter is at least one parameter relating to the plastic used from the group "raw material density, bulk density, metered amount, melt density, feed rate, melt leakage" and that the input parameters are selected from the group "melt pressure, extruder temperature, extruder speed, extruder torque, pump speed, melt temperature."

8. Method according to Claim 7, **characterized in that** the molten plastic is fed through at least one cleaning screen upstream of the spinning device in the conveying direction and that the input parameters are selected from the group or additionally from the group "melt pressure upstream of the cleaning screen, melt pressure downstream of the cleaning screen, hours of operation of the cleaning screen."

9. Method according to one of Claims 1 to 8, **characterized in that** the spunbonded nonwoven is produced from continuous filaments, that the filaments are spun by means of at least one spinneret, that the spun filaments are cooled in at least one cooling chamber or cooling device, that process air can be introduced into the cooling chamber from at least one air-supply compartment by means of at least one blower, that preferably a monomer extraction is performed between the spinneret and the cooling chamber, that the filaments are stretched and then deposited on a depositing device, in particular on a depositing foraminous belt.

10. Method according to one of Claims 1 to 9, **characterized in that** the reference parameter or output parameter is the compartment pressure of the air-supply compartment of the cooler and wherein the input parameters are parameters selected from the group "melt temperature, monomer volume flow, process air temperature, blower speed, outlet gap width of the stretching passage, positions of the diffuser walls of a diffuser."

11. Method according to one of Claims 1 to 10, **characterized in that** the nonwoven web deposited on the depositing device is consolidated, in particular with the aid of at least one calender, that the at least one reference parameter or output parameter is selected from the group "strength of the nonwoven web in the machine direction (MD), strength of the nonwoven web transverse to the machine direction (CD), stretchability of the nonwoven web in the machine direction (MD), stretchability of the nonwoven web transverse to the machine direction (CD), nonwoven web thickness" and that the input parameters are selected from the group "process air pressure, process air temperature, process air volume flow, speed of at least one calender roll, calender temperature of at least one calender roll, calender engraving, speed of the depositing foraminous belt, melt flow index (MFI) of the plastic used for the fibres or filaments."

12. Method according to one of Claims 1 to 11, **characterized in that** the depositing device is configured as a depositing foraminous belt, that at least reference parameter or output parameter is selected from the group "foraminous belt wear, in particular foraminous belt abrasion; foraminous belt clogging" and that the input parameters are selected from the group "process air volume flow of the process air suctioned through the foraminous belt, process air speed of the process air suctioned through the foraminous belt, foraminous belt speed, process air temperature and monomer volume flow".

13. Method according to one of Claims 1 to 12, **characterized in that** a multiplicity of reference parameters, namely at least two reference parameters, preferably at least three reference parameters is/are provided and that a plurality of input parameters is measured from which input parameters a multiplicity of output parameters corresponding to the reference parameters is determined and that in the event of a deviation of at least one determined value of an output parameter from at least one value of the reference parameter, an anomaly of the output parameter is signalled.

14. Method according to Claim 13, **characterized in that** a reference model is determined from the multiplicity of reference parameters and that an output model is determined from the plurality of input parameters and that in the event of a deviation of the output model from the reference model, an anomaly of the output model is signalled.

15. Method according to one of Claims 1 to 14, **characterized in that** at least a part, in particular the majority of the input parameters is measured continuously and that the at least one output parameter or the output model is determined therefrom and that expediently in this case, a sampling period of 0.5 s to 10 min, preferably of 1 s to 1 min is used.

16. Nonwoven production system for producing a nonwoven from fibres, preferably for producing a spun-bonded nonwoven from continuous filaments or for producing a meltblown nonwoven from continuous filaments, in particular for carrying out a method according to one of Claims 1 to 15, wherein at least one spinning device is provided for spinning the fibres or filaments, wherein optionally at least one cooling device is provided for cooling the spun fibres or filaments, wherein preferably at least one stretching device is provided for stretching the fibres or filaments and wherein at least one depositing device, in particular a depositing foraminous belt is provided for depositing the fibres or filaments to form a nonwoven web,
**characterized in that** furthermore a multiplicity of measuring devices or measuring sensors is provided for the measurement of at least two input parameters which differ from a reference parameter, that at least one measuring device or at least one measuring sensor is disposed in the region of the spinning device and/or in the region of the cooling device and/or in the region of the stretching device and/or in the region of the at least one diffuser and/or in the region of the depositing device, that furthermore at least one evaluation device is provided which is adapted with the proviso that an output parameter corresponding to the reference parameter can be determined from the measured input parameters.

17. System according to Claim 16, **characterized in that** the determined output parameter can be compared with at least one provided reference parameter.

18. System according to Claim 17, **characterized in that** at least one signal device is provided by means of which a deviation of the output parameter from the reference parameter can be signalled.

19. System according to one of Claims 16 to 18, **characterized in that** at least one extruder for feeding a plastic or a plastic melt to the spinning device is provided, wherein preferably at least one cleaning screen and/or at least one melt pump is disposed between the extruder and the spinning device, that the at least one measuring device or the at least one measuring sensor is positioned in the region of the extruder and/or in the region of the melt pump and/or in the region of the cleaning screen.

20. System according to one of Claims 16 to 19, **characterized in that** the cooling device comprises at least one cooling chamber and at least one air-supply compartment for feeding process air into the cooling chamber and that the at least one measuring device or the at least one measuring sensor are disposed in the cooling chamber and/or in the air-supply compartment and/or at the at least one blower of the air-supply compartment and/or at at least one extraction gap of the monomer extraction device and/or at at least one extraction blower of the monomer extraction device.

21. System according to one of Claims 16 to 20, **characterized in that** a or the assembly of cooling device and stretching device is formed as a closed assembly and that apart from the supply of the process air in the cooling device, no further supply of air takes place in this assembly.

## Revendications

1. Procédé, destiné à produire un non-tissé en fibres dans une installation de production de non-tissé, notamment à produire un non-tissé filé lié à partir de filaments continus ou à produire un non-tissé fondu par soufflage à partir de filaments continus, les fibres ou les filaments étant filé(e)s au moyen d'au moins un dispositif de filage, le cas échéant, étant refroidi (e) s par la suite au moyen d'au moins un dispositif de refroidissement, étant de préférence étiré(e)s et déposé(e)s sous la forme d'une bande de non-tissé sur un système de dépose,
**caractérisé en ce qu'**il est mis à disposition au moins un paramètre de référence, **en ce qu'**en cours de fonctionnement de l'installation, au moins deux, de préférence au moins trois paramètres d'entrée différents du paramètre de référence sont mesurés à l'aide de dispositifs de mesure et **en ce qu'**à partir de ces paramètres d'entrée mesurés, un paramètre de sortie correspondant au paramètre de référence est déterminé au moyen d'au moins un système d'évaluation.

2. Procédé selon la revendication 1, **caractérisé en ce que** le paramètre de sortie déterminé est comparé, notamment comparé en continu avec le paramètre de référence.

3. Procédé selon l'une quelconque des revendications 1 ou 2, **caractérisé en ce qu'**à chaque divergence entre au moins une valeur déterminée pour le paramètre de sortie et l'au moins une valeur ou valeur mesurée pour le paramètre de référence, une anomalie du paramètre de sortie est signalée par au moins un signal, notamment par un signal visuel et/ou acoustique et **en ce que** de préférence, l'anomalie est documentée et avantageusement mémorisée dans une mémoire indépendante.

4. Procédé selon l'une quelconque des revendications 1 à 3, **caractérisé en ce que** l'au moins un paramètre de référence est mesuré à l'aide d'au moins un dispositif de mesure de référence dans un mode référentiel de l'installation de production de non-tissé et/ou **en ce que** le paramètre de référence est prédéfini en tant que paramètre expérimental.

5. Procédé selon l'une quelconque des revendications 1 à 4, **caractérisé en ce qu'**au moins un paramètre d'entrée est prédéfini en tant que paramètre fixe ou constant de l'installation et est utilisé pour déterminer le paramètre de sortie et **en ce que** les autres paramètres d'entrée sont mesurés.

6. Procédé selon l'une quelconque des revendications 1 à 5, **caractérisé en ce qu'**au moins un paramètre de référence ou la valeur de référence du paramètre de référence est calculé (e) et sert de préférence de base à la comparaison avec le paramètre de sortie et/ou **en ce qu'**au moins un paramètre d'entrée est calculé, ledit paramètre d'entrée calculé étant pris en considération dans la détermination du paramètre de sortie.

7. Procédé selon l'une quelconque des revendications 1 à 6, **caractérisé en ce que** les fibres ou les filaments sont produits en une matière thermoplastique, **en ce que** la matière plastique est alimentée vers le dispositif de filage au moyen d'au moins une extrudeuse, **en ce que** de préférence la matière plastique sortant de l'extrudeuse ou la matière plastique en fusion est alimentée vers le dispositif de filage à l'aide d'une pompe de masse fondue, **en ce que** l'au moins un paramètre de référence ou paramètre de sortie est au moins un paramètre concernant la matière plastique mise en œuvre, du groupe « densité de la matière première, masse volumique apparente, quantité de dosage, densité de la masse fondue, débit d'extraction, fuite de masse fondue » et **en ce que** les paramètres d'entrée sont sélectionnés dans le groupe « pression de la masse fondue, température de l'extrudeuse, régime de l'extrudeuse, couple de l'extrudeuse, régime de la pompe, température de la masse fondue ».

8. Procédé selon la revendication 7, **caractérisé en ce que** la matière plastique en fusion est conduite à l'avant du dispositif de filage dans la direction de transport à travers au moins un tamis purifiant et **en ce que** les paramètres d'entrée sont sélectionnés dans le groupe ou additionnellement dans le groupe « pression de la masse fondue à l'avant du tamis purifiant, pression de la masse fondue à l'arrière du tamis purifiant, heures de service du tamis purifiant ».

9. Procédé selon l'une quelconque des revendications 1 à 8, **caractérisé en ce que** le non-tissé est produit sous la forme d'un non-tissé filé lié à partir de filaments continus, **en ce que** les filaments sont filés au moyens d'au moins une busette, **en ce que** les filaments filés sont refroidis dans au moins une chambre de refroidissement ou un dispositif de refroidissement, **en ce que** dans la chambre de refroidissement, de l'air de processus peut être introduit à partir d'au moins une cabine d'apport d'air au moyen d'au moins une soufflante, **en ce qu'**entre la busette et la chambre de refroidissement, il est procédé de préférence à une aspiration de monomère, **en ce que** les filaments sont étirés et déposés ensuite sur un système de dépose, notamment sur une toile perforée de dépose.

10. Procédé selon l'une quelconque des revendications 1 à 9, **caractérisé en ce que** le paramètre de référence ou le paramètre de sortie est la pression régnant dans la cabine d'apport d'air et les paramètres d'entrée étant des paramètres sélectionnés dans le groupe « température de la masse fondue, débit volumétrique du monomère, température de l'air de processus, régime de la soufflante, largeur de la fente de sortie du canal d'étirage, positions des parois de diffusion d'un diffuseur ».

11. Procédé selon l'une quelconque des revendications 1 à 10, **caractérisé en ce que** la bande de non-tissé déposée sur le système de dépose est consolidée, notamment consolidée à l'aide d'au moins une calandre, **en ce que** l'au moins un paramètre de référence ou paramètre de sortie est sélectionné dans le groupe « solidité de la bande de non-tissé dans la direction de la machine (MD), solidité de la bande de non-tissé à la transversale de la direction de la machine (CD), ductilité de la bande de non-tissé dans la direction de la machine (MD), ductilité de la bande de non-tissé à la transversale de la direction de la machine (CD), épaisseur de la bande de non-tissé » et **en ce que** les paramètres d'entrée sont sélectionnés dans le groupe « pression de l'air de processus, température de l'air de processus, débit volumétrique de l'air de processus, régime d'au moins un rouleau de calandrage, température de calandrage d'au moins un rouleau de calandrage, gravure de la calandre, vitesse de la toile perforée de dépose, débit d'écoulement de la masse fondue (MFI) de la matière plastique mise en œuvre pour les fibres ou filaments ».

12. Procédé selon l'une quelconque des revendications 1 à 11, **caractérisé en ce que** le système de dépose est conçu sous la forme d'une toile perforée de dépose, **en ce qu'**au moins un paramètre de référence ou paramètre de sortie est sélectionné dans le groupe « usure de la toile perforée, notamment abrasion de la toile perforée ; obturation de la toile de dépose » et **en ce que** les paramètres d'entrée sont sélectionnés dans le groupe « débit volumétrique de l'air de processus aspiré à travers la toile perforée, vitesse de l'air de processus aspiré à travers la toile perforée, température de l'air de processus, débit volumétrique du monomère ».

13. Procédé selon l'une quelconque des revendications 1 à 12, **caractérisé en ce qu'**une multiplicité de paramètres de référence, à savoir au moins deux paramètres de référence, de préférence au moins trois paramètres de référence est/sont mis à disposition et **en ce qu'**une pluralité de paramètres d'entrée est mesurée, à partir desquels paramètres d'entrée est déterminé un nombre de paramètres de sortie correspondant aux paramètres de référence et **en ce que** lors d'une divergence entre au moins une valeur déterminée pour un paramètre de sortie et au moins une valeur de paramètre de référence, une anomalie du paramètre de sortie est signalée.

14. Procédé selon la revendication 13, **caractérisé en ce qu'**à partir de la multiplicité de paramètres de référence est déterminé un modèle de référence et **en ce qu'**à partir de la pluralité de paramètres d'entrée est déterminé un modèle initial et **en ce que** dans le cas d'une divergence entre le modèle initial et le modèle de référence, une anomalie du modèle initial est signalée.

15. Procédé selon l'une quelconque des revendications 1 à 14, **caractérisé en ce qu'**au moins une partie, notamment la majeure partie des paramètres d'entrée est mesurée en continu et **en ce qu'**il en est déterminé l'au moins un paramètre de sortie ou le modèle initial et **en ce qu'**à cet effet, il est travaillé avantageusement avec une période d'échantillonnage de 0,5 seconde à 10 minutes, de préférence de 1 seconde à 1 minute.

16. Installation de production de non-tissé, destinée à produire un non-tissé en fibres, de préférence à produire un non-tissé filé lié à partir de filaments continus ou à produire un non-tissé fondu par soufflage à partir de filaments continus, destinée notamment à réaliser un procédé selon l'une quelconque des revendications 1 à 15, au moins un dispositif de filage étant prévu pour filer les fibres ou les filaments, le cas échéant, au moins un dispositif de refroidissement étant présent pour refroidir les fibres ou les filaments, de préférence étant prévu au moins un système d'étirage, destiné à étirer les fibres ou les filaments et au moins un système de dépose, notamment une toile perforée de dépose étant présente pour déposer les fibres ou les filaments en une bande de non-tissé,
**caractérisée en ce qu'**il est prévu par ailleurs une multiplicité de dispositifs de mesure ou de capteurs de mesure, destinés à mesurer au moins deux paramètres d'entrée différents d'un paramètre de référence, **en ce qu'**au moins un dispositif de mesure ou au moins un capteur de mesure est placé dans la zone du dispositif de filage et/ou dans la zone du dispositif de refroidissement et/ou dans la zone du système d'étirage et/ou dans la zone d'au moins un diffuseur et/ou dans la zone du système de dépose, **en ce qu'**en outre, au moins un système d'évaluation est présent qui est aménagé avec le critère qu'à partir des paramètres d'entrée mesurés, il puisse être déterminé un paramètre de sortie correspondant au paramètre de référence.

17. Installation selon la revendication 16, **caractérisée en ce que** le paramètre de sortie déterminé est comparable avec au moins un paramètre de référence mis à disposition.

18. Installation selon la revendication 17, **caractérisé en ce qu'**il est prévu au moins un système de signalisation, permettant de signaler une divergence entre le paramètre initial et le paramètre de référence.

19. Installation selon l'une quelconque des revendications 16 à 18, **caractérisée en ce qu'**il est prévu au moins une extrudeuse, destinée à alimenter vers le dispositif de filage une matière plastique ou une masse fondue de matière plastique, de préférence entre l'extrudeuse et le dispositif de filage étant placé au moins un tamis purifiant et/ou au moins une pompe à masse fondue, **en ce que** l'au moins un dispositif de mesure ou l'au moins un capteur de mesure est positionné dans la zone de l'extrudeuse et/ou dans la zone de la pompe à masse fondue et/ou dans la zone du tamis purifiant.

20. Installation selon l'une quelconque des revendications 16 à 19, **caractérisée en ce que** le dispositif de refroidissement comporte au moins une chambre de refroidissement et au moins une cabine d'apport d'air, destinée à alimenter de l'air de processus dans la chambre de refroidissement et **en ce que** l'au moins un dispositif de mesure ou l'au moins un capteur de mesure est placé dans la chambre de refroidissement et/ou dans la cabine d'apport d'air et/ou sur au moins une soufflante de la cabine d'apport d'air et/ou sur au moins une fente d'aspiration de l'aspiration de monomère et/ou sur au moins une soufflante d'aspiration de l'aspiration de monomère.

21. Installation selon l'une quelconque des revendications 16 à 20, **caractérisée en ce qu'**un ou le groupe composé du dispositif de refroidissement et du système d'étirage est conçu sous la forme d'un groupe fermé et **en ce qu'**à l'exception de l'introduction de l'air de processus dans le dispositif de refroidissement, aucun autre apport d'air ne s'effectue dans ledit groupe.
